# EUROPEAN PATENT SPECIFICATION

(11) **EP 0 508 120 B1**
(45) Date of publication and mention of the grant of the patent: **14.06.1995**
(21) Application number: 92103977.2
(22) Date of filing: 09.03.1992
(51) Int. Cl.: C09D 163/00, C09D 133/06, C08L 63/00, C08L 33/06

(54) **Aqueous resin composition and method for forming coating film on can body**
Wässrige Harzzusammensetzung und Verfahren zur Beschichtung von Dosen
Composition aqueuse à base de résines et procédé pour le revêtement de boîtes

(30) Priority: 11.03.1991 JP 69376/91; 11.03.1991 JP 69427/91; 20.11.1991 JP 329762/91
(43) Date of publication of application: 14.10.1992
(73) Proprietor: Nippon Paint Co., Ltd., Osaka-shi Osaka-fu (JP)
(72) Inventor: Nishimura, Satoshi, Sagamihara-shi, Kanagawa-ken (JP); Hirasawa, Hidekimi, Kawasaki-shi, Kanagawa-ken (JP); Iimure, Tamio, Omiya-shi, Saitama-ken (JP)
(74) Representative: Hansen, Bernd, Dr. Dipl.-Chem.

(56) References cited:
- EP-A- 0 116 225
- WO-A-83/03613

## Description

### BACKGROUND OF THE INVENTION

This invention relates to an aqueous epoxy resin composition, more specifically it relates to an aqueous resin composition which is excellent in stability of an aqueous dispersion and processability, curability and corrosion resistance of a coated film, and is suitable for a metal can, particularly for inner surface coating of food cans and beverage cans excellent in flavor maintaining property.

This invention also relates to a method for forming a coating film on an inner surface of a can body such as two-piece (2P) can used as cans for beverage or food, more specifically it relates to a method for forming a coating film of a can body excellent in adhesiveness and corrosion resistance, which is applicable with coatings of a pre-coat using an aqueous coating composition comprising an acryl-epoxy-acryl resin and a top coating layer.

A coating for a metallic can is required to be sufficiently durable to various conditions during working and commercial distribution of the metallic can and a content therein. It is also important to deal with various problems such as hygiene of working conditions and prevention of fire and explosion, and particularly important for beverage or food cans to satisfy the requirements on food hygiene. Thus, in recent years, an aqueous coating has widely been used.

In such a situation, an aqueous epoxy resin coating composition has been particularly attracted to attention due to its easiness in handling and various compositions have been proposed. For example, in Japanese Provisional Patent Publication No. 135260/1984 (which corresponds to U.S. Patent No. 4,446,258 of Chu et al.), there is disclosed an aqueous resin composition in which an acrylic resin-modified epoxy resin having a high acid value and an acrylic resin containing no acidic group are dispersed in an amine aqueous solution.

However, these prior art aqueous epoxy resin compositions have problems that they are generally insufficient in dispersion stability, poor in processability or corrosion resistance, or low in flavor maintaining properly.

In the aqueous dispersion coating composition of the prior art, when an acrylic resin having a low glass transition temperature is used in order to improve processability of a coated film, stability of aqueous dispersion lowered so that processability and stability of aqueous dispersion are imcompatible with each other.

On the other hand, a two-piece can has generally been used widely than the conventional three-piece (3P) can since the former is inexpensive, high quality and beautiful. However, it has been produced by Draw & Ironing (hereinafter abbreviated to as "DI") processing using a tin plate or an aluminum plate as a raw material so that some problems, which should be solved, remain in coating of such a DI can.

Thus, In Japanese Patent Publication No. 4753/1985, there is disclosed a process for producing a highly corrosion resistant DI can comprising coating a paint for cans, containing at least one of an epoxy group, a hydroxyl group and a carboxyl group on a steel plate containing a metallic chromium layer and a hydrated chromium oxide layer, then subjecting to DI processing, coating once again and baking. Also, in Japanese Patent Publication No. 25784/1990, there is disclosed a coated steel plate for DI cans improved in adhesiveness and corrosion resistance, in which a steel plate subjected to specific plating and conversion treatment is coated with a thermoplastic polyester which is capable of orientating. Further, in Japanese Provisional Patent Publication No. 92850/1986, there is disclosed a coated steel plate for DI cans having excellent corrosion resistance, in which a steel plate subjected to specific conversion treatment is coated with a vinyl chloride series organo sol coating containing a resol type phenol resin.

However, each of the above prior art uses an organic solvent type coating so that they are not preferred in the point of fire, working environment and global environment. Further, they are not necessary sufficient in interlaminar adhesiveness or high temperature resistance for sterilization.

WO-A-8303613 discloses a water-borne coating composition consisting essentially of a liquid carrier and a second reaction product made by blending a second carboxyl-functional polymer with a first reaction product. The first reaction product is represented by the product resulting from the reaction of an epoxy resin, a first carboxyl-functional polymer including an acid number of 100 to 500, a tertiary amine and optionally one primary, secondary or tertiary amine or monofunctional quaternary ammonium hydroxide. The second carboxyl-functional polymer includes an acid number of 50 to 500.

EP-A-0 116 225 discloses an aqueous coating composition comprising an anionic polymer being the reaction product of an epoxy resin containing 1,2-epoxy groups and an additional polymer containing carboxyl groups; an addition polymer different from said preformed above addition polymer; and ammonia or an organic amine neutralizing agent.

### SUMMARY OF THE INVENTION

In the present invention, an object of the present invention is to solve the above problems and to provide an aqueous resin composition which is excellent in both of processability and stability of aqueous dispersion, and also improved in curability, flavor maintaining property and corrosion resistance.

Another object of the present invention is to provide a method for forming a coating film excellent in interlaminar adhesiveness and corrosion resistance on an inner surface of a can body, even if necessary times for coatings are reduced, by effecting pre-coating with an aqueous coating which is favorable for circumferential environment.

In the present invention, the present inventors have found that by making multilayered structure in which an acrylic resin having a low glass transition temperature and a low acid value is wrapped up in an epoxy resin and the outside thereof is surrounded by an acrylic resin having a high acid value, processability can be improved without impairing stability of aqueous dispersion, and by previously condensing a phenol resin and/or an amino resin, curability, flavor maintaining property and corrosion resistance can be improved.

The present invention refers to an aqueous resin composition which comprises a material comprising an acrylic resin (A) having an acid value of 0 to 70 and an epoxy resin (B), which are partially bound to each other, and an acrylic resin (C) having an acid value of 100 to 500 which is further partially bound to a bound product of (A) and (B), being dispersed in an aqueous solution containing a volatile base (E),
wherein the weight ratio of the solid components of said material (A)/(B)/(C) is (1 to 20)/(90 to 50)/(9 to 30); the partial bond(s) between the acrylic resin (A) and the epoxy resin (B) and the bound product of (A) and (B) and the resin (C), respectively, are formed by at least one method selected from the group consisting of:
(1) a method in which an ester bond and/or a salt bond of the following formula (I) is formed by reacting an epoxy group of the epoxy resin and a carboxyl group of the acrylic resin using an amine as a catalyst and, if necessary, in the presence of water; 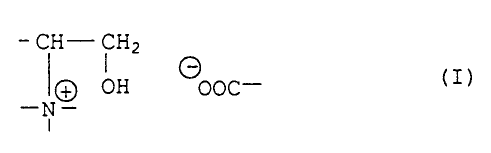
(2) a method in which an ester bond is formed by reacting an alpha, beta-unsaturated acid with the epoxy resin and then polymerizing the product as one component of polymeric monomers with other copolymerizable monomer(s); and
(3) a method in which an acrylic polymerization is carried out in an epoxy resin solution to obtain an epoxy resin-grafted acrylic resin.

A further embodiment of the aqueous resin composition of the present invention comprises a material comprising an acrylic resin (A) having an acid value of 0 to 70 and an epoxy resin (B), which are partially bound to each other, an acrylic resin (C) having an acid value of 100 to 500 which is further partially bound to a bound product of (A) and (B), and at least one of a resol type phenol resin and an amino resin (D) which is provisionally condensed with a bound product of (A), (B) and (C),
being dispersed in an aqueous solution containing a volatile base (E),
wherein the weight ratio of the solid components of said material (A)/(B)/(C) is (1 to 20)/(90 to 50)/(9 to 30); the partial bond(s) between the acrylic resin (A) and the epoxy resin (B) and the bound product of (A) and (B) and the resin (C), respectively, are formed by at least one method selected from the group consisting of:
(1) a method in which an ester bond and/or a salt bond of the following formula (I) is formed by reacting an epoxy group of the epoxy resin and a carboxyl group of the acrylic resin using an amine as a catalyst and, if necessary, in the presence of water; 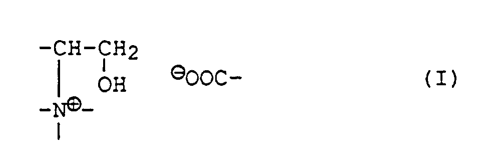
(2) a method in which an ester bond is formed by reacting an alpha,beta-unsaturated acid with the epoxy resin and then polymerizing the product as one component of polymeric monomers with other copolymerizable monomer(s); and
(3) a method in which an acrylic polymerization is carried out in an epoxy resin solution to obtain an epoxy resin-grafted acrylic resin.

Also, a method for forming a coating film is included in the present invention which comprises the steps of:
(I) subjecting to pre-coat coating of the above aqueous resin composition on the surface of a metal plate;
(II) curing a film of the above pre-coat coating;
(III) subjecting to plastic processing of the metal plate coated with the pre-coat coating by making the cured film inner surface to form a can body having a bottom;
(IV) subjecting to top-coat coating of an epoxy resin series aqueous coating or the above aqueous resin composition of the step (I) on the inner surface of the can body having a bottom; and
(V) curing the above top-coat coating film.

### DESCRIPTION OF THE PREFERRED EMBODIMENTS

In the following, the present invention will be explained in detail.

The acrylic resin (A) or (C) to be used in the present invention is a copolymer obtained by reacting an α,β-unsaturated carboxylic acid and a monomer capable of copolymerising with the former. As the α,β-unsaturated carboxylic acid, there may be exemplified by an unsaturated monobasic acid such as acrylic acid and methacrylic acid, and an unsaturated dibasic acid such as maleic acid and fumaric acid, or a monoalkyl (1 to 12 carbon atoms) ester of the above.

As the copolymerizable monomer, there may be exemplified by an alkyl acrylate such as methyl acrylate, ethyl acrylate and butyl acrylate; an alkyl methacrylate such as methyl methacrylate, ethyl methacrylate and butyl methacrylate; a styrene series monomer such as styrene, vinyltoluene and chlorostyrene; a hydroxyl group-containing acrylic monomer such as 2-hydroxyethyl acrylate, 2-hydroxypropyl acrylate, 2-hydroxyethyl methacrylate and 2-hydroxypropyl methacrylate; an unsaturated dibasic dialkyl ester such as dimethyl maleate, dibutyl maleate, dimethyl fumarate and dibutyl fumarate; a vinyl ester such as vinyl acetate and vinyl lactate; an acrylamide such as dimethyl acrylamide and dimethyl methacrylamide; and acrylonitrile and methacrylonitrile.

The copolymerization reaction is generally carried out by reacting both monomers in an organic solvent using a free radical generating agent such as benzoyl peroxide or azobisisobutyronitrile as a polymerization initiator at a temperature of 80 to 150 °C.

An acid value of the acrylic resin (A) having a low acid value is 70 or less, preferably 50 or less, more preferably 5 to 50. If it exceeds 70, multilayered structure cannot be obtained so that stability of aqueous dispersion becomes low. An acid value of the acrylic resin (C) having a high acid value is 100 to 500, more preferably 150 to 350. If the acid value is less than 100, dispersion stability in water, working resistance of a coated film, and flavor maintaining property depending on the use becomes poor, while it exceeds 500, corrosion resistance, hot water resistance and retort resistance becomes poor.

Number average molecular weights of the acrylic resins (A) and (C) are each preferably 3,000 to 80,000. If it is less than 3,000, working resistance, corrosion resistance and flavor maintaining property are lowered, while it exceeds 80,000, a solid content at a suitable coating viscosity is lowered.

The epoxy resin (B) to be used in the present invention is an epoxy resin containing 40 % or more, preferably 60 % or more of a condensed unit of bisphenol A, F, B or a halogen-substituted bisphenol of the above bisphenols with epihalohydrin, and having a number average molecular weight of 1,000 or more, preferably 3,000 or more with one or more oxyrane ring at the terminal thereof, and it can be prepared according to the following method. Also, these epoxy resins may be used in a combination.
1. An epoxy resin obtained by the reaction of bisphenol A, F, B or a halogen-substituted bisphenol of the above bisphenols with epihalohydrin or β-methylepihalohydrin.
2. An epoxy resin obtained by the reaction of the epoxy resin mentioned in the above 1 with bisphenol A, F, B or a halogen-substituted bisphenol of the above bisphenols.
3. A modified epoxy resin obtained by the reaction of the epoxy resin mentioned in the above 1 or 2 with a dibasic acid such as phthalic acid (anhydride), maleic acid (anhydride) and adipic acid.
4. A modified epoxy resin obtained by the reaction of the epoxy resin mentioned in the above 1 or 2 with a monobasic acid such as acetic acid, butyric acid, benzoic acid, castor oil fatty acid, soybean oil fatty acid and tall oil fatty acid.
5. A modified epoxy resin obtained by the reaction of the epoxy resin mentioned in the above 1 or 2 with a polyester polyol obtained by the reaction of a (polyvalent) alcohol and a (poly)basic acid.

Here, examples of the polyvalent alcohol may include ethylene glycol, propylene glycol, 1,4-butanediol, 1,6-hexanediol and trimethylolpropane. Examples of the polybasic acid may include a dibasic acid such as phthalic acid (anhydride), maleic acid (anhydride), adipic acid, trimellitic acid, pyromellitic acid; and trimellitic acid anhydride and pyromellitic acid anhydride.

As the partial bond(s) forming method of the epoxy resin (B) and the acrylic resins (A) and (C), the following three methods can be employed.
1. A method in which an ester bond and/or a salt bond of the following formula (I) is formed by reacting an epoxy group of the epoxy resin and a carboxyl group of the acrylic resin using an amine as a catalyst and, if necessary, in the presence of water. 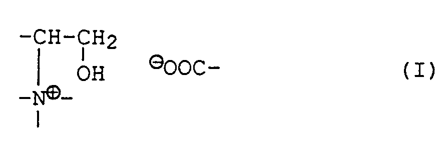
2. A method in which an ester bond is formed by reacting an α,β-unsaturated acid with the epoxy resin and then polymerizing the product as one component of polymeric monomers with other copolymerizable monomer(s).
3. A method in which an acrylic polymerization is carried out in an epoxy resin solution to obtain an epoxy resin-grafted acrylic resin.

The weight ratio of the solid components (the acrylic resin (A) having a low acid value/the epoxy resin (B)/the acrylic resin (C) having a high acid value) is given by (1 to 20)/(90 to 50)/(9 to 30). If a used ratio of the acrylic resin (A) having a low acid value is less than 1, modifying effect of a coated film such as improvement in processability cannot be admitted, while it exceeds 20, corrosion resistance is lowered. Also, if a used ratio of the acrylic resin (C) having a high acid value is less than 9, dispersion stability is lowered, while it exceeds 30, corrosion resistance, hot water resistance and retort resistance are lowered. More preferably, it is (5 to 15)/(85 to 60)/(10 to 25), further preferably (5 to 10)/(85 to 70)/(10 to 20).

As the resol type phenol resin and/or amino resin (D) to be used in the present invention, there may be mentioned a resol type phenol resin obtained by reacting phenol, a phenol having an alkyl substituent with 1 to 12 carbon atoms, or bisphenol A, F or B with formaldehyde in the presence of an alkaline catalyst and/or an alkyl (1 to 8 carbon atoms) etherified product or allyl etherified product thereof. Also, as the amino resin, there may be mentioned a melamine resin such as a partially methylated melamine resin, a completely methylated melamine resin, a partial butylated melamine resin and a completely butylated melamine resin; a urea resin such as a partially methylated urea resin and a completely methylated urea resin.

A weight ratio of solid components to be mixed is preferably the resol type phenol resin and/or amino resin (D)/[the acrylic resins (A) and (C) + the epoxy resin (B)] of 0.5/100 to 50/100. If it is less than 0.5/100, improvement in corrosion resistance and adhesiveness of a coating film cannot be admitted, while it exceeds 50/100, flavor maintaining property is lowered. More preferably, it is 1/100 to 30/100.

When the acrylic resins (A) and (C), and the resol type phenol resin and/or amino resin (D) are provisionally condensed, the weight ratio of (D)/[(A) + (C)] is preferably in the range of 1/100 to 500/100 calculated on weights of solid components. If it less than 1/100, corrosion resistance of a coated film is lowered and the effect of previous condensation cannot be exhibited, while it exceeds 500/100, flavor maintaining property of a coated film is lowered. More preferably, it is 2/100 to 150/100.

Also, previous condensation of the epoxy resin (B) and the resol type phenol resin and/or amino resin (D) is preferably carried out in the weight ratio of 0.5/100 to 100/100 calculated on weights of solid components. If it less than 0.5/100, adhesiveness and corrosion resistance of a coated film are lowered and the effect of previous condensation cannot be exhibited, while it exceeds 100/100, flavor maintaining property of a coated film is lowered. More preferably, it is 1/100 to 50/100.

The weight ratio of [at least one of the resol type phenol resin and amino resin (D)]/[the epoxy resin (B) + the acrylic resins (A) and (C)] calculated on weights of solid components is preferably in the range of 0.5/100 to 100/100. If it is less than 0.5/100, adhesiveness of a coated film is lowered, while it exceeds 100/100, flavor maintaining property of a coated film is lowered. More preferably, it is 1/100 to 50/100.

The above previous condensation is carried out by reacting at 50 to 150 °C for 30 min to 5 hours.

The previous condensation can be carried out to the following component(s) and may be carried out in combination.
1. The epoxy resin alone.
2. Partial bound product of the epoxy resin and the acrylic resin having a low acid value.
3. Simultaneously with formation of partial binding(s) of the epoxy resin and the acrylic resin having a low acid value.
4. The acrylic resin having a low acid value.
5. Partial bound product of the epoxy resin, the acrylic resin having a low acid value and the acrylic resin having a high acid value.
6. Partial bound product in which the acrylic resin having a low acid value and the acrylic resin having a high acid value are simultaneously partially bound to the epoxy resin.
7. The acrylic resin having a high acid value.

An aqueous coating comprising emulsion particles having three-layered structure of acryl-epoxy-acryl obtained as mentioned above can be used as at least a pre-coating whereby the object of the present invention can be accomplished. When it is used as a top-coating, the composition of which may be the same as those used in the pre-coating or may be different within the above composition range.

In the preparation of the aqueous resin composition of the present invention, an organic solvent which is capable of dissolving the acrylic resins (A) and (C) (hereinafter referred to those including a material which is provisionally condensed with the resol type phenol resin and/or amino resin) and the epoxy resin (B) (hereinafter referred to those including a material which is provisionally condensed with the resol type phenol resin and/or amino resin). Examples of the solvents to be generally used, there may be mentioned an alcohol such as isopropanol, butanol, 2-ethylhexanol and cyclohexanol; a glycol such as ethylene glycol, diethylene glycol and 1,3-butylene glycol; a glycol ether such as ethyleneglycol monomethyl ether and ethyleneglycol monobutyl ether; a glycol ether ester such as ethyleneglycol ethyl ether acetate and ethyleneglycol methyl ether propionate; a ketone such as methyl isobutyl ketone and cyclohexanone; an aromatic hydrocarbon such as toluene and xylene; and a mixture of the above solvents.

However, an amount of the organic solvent to be used for dissolving the epoxy resin (B) and the acrylic resins (A) and (C) is preferably made as little as possible in the range of causing any trouble in handling operations. If necessary, the solvent may be removed under normal pressure or reduced pressure from the aqueous resin dispersion. The final content of the organic solvent in the aqueous resin dispersion is preferably 20 % by weight or less.

In the aqueous resin dispersion of the present invention, a carboxyl group of the acrylic resin (C) having a high acid value forms a quaternary ammonium salt in an aqueous solution which was made a pH of 5 to 11 by adding a volatile base (E) to provide water dispersibility.

As the volatile base (E), there may be mentioned ammonia; an alkylamine such as methylamine, dimethylamine, trimethylamine, ethylamine, diethylamine, triethylamine, butylamine, dibutylamine and tributylamine; an aminoalcohol such as ethanolamine, methylethanolamine and dimethylethanolamine; and a cyclic amine such as morpholine. Among these, a tertiary amine is particularly preferred.

As the dispersing method to the volatile base (E) aqueous solution, there may be used the following methods.
1. After adding a necessary amount of the volatile base to a mixture containing all of the resins obtained, the mixture is charged in water and dispersed therein, or water is added to the mixture and the mixture is dispersed.
2. A necessary amount of a mixed solution containing water and the volatile base is added to a mixture containing all of the resins obtained, and dispersed.
3. A mixture containing all of the resins obtained is added to a necessary amount of a mixed solution containing water and the volatile base, and dispersed.
4. After adding a necessary amount of the volatile base to the acrylic resin having a high acid value, the mixture is charged in water or water is charged in the mixture to disperse the mixture, and the remaining resins are added to the dispersion and the whole components are dispersed therein.
5. After adding a necessary amount of a mixture containing water and the volatile base to the acrylic resin having a high acid value and dispersed therein, and the remaining resins are added to the dispersion and the whole components are dispersed therein.
6. A necessary amount of the volatile base is added to the acrylic resin having a high acid value to which the phenol resin and/or amino resin is/are provisionally condensed or not condensed, then the mixture is charged in water or water is charged in the mixture to disperse the mixture, and then the remaining resins are added to the dispersion and the whole components are dispersed therein.
7. A necessary amount of a mixture of water and the volatile base is added to the acrylic resin having a high acid value to which the phenol resin and/or amino resin is/are provisionally condensed or not condensed, and then the remaining resins are added to the dispersion and the whole components are dispersed therein. Or else, the dispersion is added to the remaining resins to disperse the mixture therewith.
8. To a necessary amount of a mixture of water and the volatile base is added the acrylic resin having a high acid value to which the phenol resin and/or amino resin is/are provisionally condensed or not condensed, and then the remaining resins are added to the dispersion and the whole components are dispersed therein. Or else, the dispersion is added to the remaining resins to disperse the mixture therewith.

The composition of the aqueous resin composition is preferably a resin solid content of 10 to 40 % by weight, an organic solvent of 0 to 20 % by weight and water of 90 to 40 % by weight.

The aqueous resin composition of the present invention may further contain, if necessary, a phenol resin and/or a melamine resin, an amino resin such as a urea resin, and a curing catalyst such as p-toluenesulfonic acid to form an aqueous dispersion. Examples of the melamine resin to be used may include a partially methylated melamine resin, a completely methylated melamine resin, a partial butylated melamine resin and a completely butylated melamine resin. Also, examples of the urea resin may include a partially methylated urea resin and a completely methylated urea resin, and examples of the phenol resin may include a resol type or a novolak type phenol resin obtained from phenol, an alkyl phenol, bisphenol A, F or B, or a halogen-substituted phenol of the above, or an alkyl (1 to 8 carbon atoms) etherified resin or an allyl etherified resin.

The aqueous resin composition of the present invention may be used as an aqueous coating composition such as anti-corrosive primer or anti-corrosive coatings, or an aqueous printing ink by adding an anti-corrosive agent, a pigment or a filler suitable for the use in an amount which does not impair the characteristics of the composition.

By using the anti-corrosive agent and/or the pigment, corrosion resistance of a coating film can be improved or beauty appearance of a coating film can be provided. An amount of these components is preferably 30 % by weight or less, more preferably 20 % by weight or less based on the total composition. As a basic anti-corrosive pigment, there may be mentioned a lead type pigment such as red lead oxide, lead suboxide, lead cyanamide and basic lead chromate; and a boric acid type pigment such as barium metaborate, calcium borate and zinc borate; and as the other pigments, there may be mentioned a chromic acid type pigment such as zinc chromate and strontium chromate; a molybdic acid type pigment such as zinc molybdate and calcium molybdate; a tungstic acid type pigment; a phosphoric acid type pigment such as zinc phosphate and aluminum phosphate; an organic metal salt type pigment such as a zinc salt of an organic nitro compound; and a phosphite type pigment. As a metallic soap-forming anti-corrosive pigment, there may be mentioned a lead type, alkaline earth metal type and zinc type pigments. Also, as a corrosive pigment having a shape of pigment particle, there may be mentioned, for example, mica-shaped iron oxide. These pigments may be used singly or in combination of two or more.

As a substrate to be coated by the aqueous resin composition of the present invention, there may be mentioned, for example, a metal such as a steel plate, an aluminum plate, a plated steel plate in which single or plural number of metals such as zinc, tin, chromium, nickel and aluminum are plated on the surface of a steel plate, a plate in which the surface of the above plated steel plate is chemically treated with chromic acid or phosphoric acid, or subjected to electrolytic treatment, and further a paper and a wood. As a coating method, conventionally known methods can be utilized. That is, there may be used air spraying, airless spraying, roll coating, electrodeposition, dip coating and brushing.

Examples of the top-coat coating to be used in the method of the present invention, there may be mentioned the above aqueous coatings and/or a well known epoxy type aqueous coating such as an acrylic resin-modified epoxy resin aqueous coating, a polyester-modified epoxy resin aqueous coating, a polybasic acid-modified epoxy resin composition and a phosphoric acid-modified epoxy resin aqueous coating.

If necessary, the resol type phenol resin and/or amino resin (D) may be formulated and/or provisionally condensed to the above resin.

In the aqueous coating or the epoxy resin type aqueous coating to be used in the method of the present invention, a curing catalyst such as p-toluenesulfonic acid may be added, if necessary.

Also, to these coatings, if necessary, a colored pigment, an anti-corrosive pigment, an extender pigment, a defoaming agent or a surface tension controller may be added. To the pre-coat coating may be added a lubricant such as an aliphatic acid ester, wax and other polymer compound.

As the coating method for the pre-coat coating, well known methods such as roll coater, spraying, flow coater, dipping coating and electrodeposition coating may be used, and for the top-coat coating, spraying is preferably used.

A thickness of the coating film is preferably 0.5 to 10 »m, more preferably 1 to 3 »m in the pre-coat and preferably 1 to 20 »m, more preferably 3 to 15 »m in the top-coat.

Curing of these coatings may be carried out in a hot air drying oven, an infrared heating oven, a high-frequency induction heating oven and the like singly or in combination of two or more.

Curing of the coated film may be carried out by drying at normal temperature, but preferably by compulsory drying at a temperature range of 80 to 350 °C for 10 sec to 30 min.

In the step of forming a can body having a bottom from the coated metal plate by plastic processing of the method of the present invention, the conventionally known DI method, DRD (Draw & Redraw) method, DRS (Draw & Redraw Stretch) method or impact method may be used, and also necking processing may be applied.

In the DI method, after cutting the coated metal plate to the shape of a circular plate, it is molded to a cup-shape by drawing and then molding to a predetermined can body by ironing.

The DRD method is carried out by cutting the coated metal plate to the shape of a circular plate, molding it to a cup-shape by drawing and then repeating the drawing to form a predetermined shape of can body.

The DRS method is carried out by cutting the coated metal plate to the shape of a circular plate, molding it to a cup-shape by drawing and then subjecting to stretching of a can wall while subjecting to drawing again, to form a predetermined shape of can body.

The impact method is carried out by abruptly applying a pressure in the cold according to impact extrusion press whereby the raw material is subjected to flow of plasticity into a gap between a punch and a die to form a predetermined shape of can body.

As a raw material of a metal plate to be coated, a sheet-shaped or a coil-shaped material as mentioned below may be used.
(1) An alloy of at least one of a metal such as aluminum, copper, manganese, silicon, magnesium and zinc, with aluminum.
(2) A steel plate or a plated steel plate on which at least one metal such as zinc, tin, chromium, nickel and aluminum is plated.
(3) A plate in which the plate of the above (1) or (2) is chemically treated with chromic acid or phosphoric acid, electrolytically treated or plated.

After DI processing, usual alkali defatting or acidic defatting is carried out followed by washing with water, draining off the water and drying, top-coat coating can be carried out by spraying. Also, after defatting, chemical treatment with chromic acid or phosphoric acid, or electrolytically treatment is subjected to, followed by washing with water, draining off the water and drying are carried out, and inner surface spray coating may carried out.

The aqueous resin composition of the present invention is dissolved or dispersed to a solvent or a dispersant according as the purpose and use to obtain a paint, lacquer or coating solution which is generally called "coating composition", and then the dissolved or dispersed coating composition is coated on a substrate to form a film. As a result, the coated article comprising the coating composition of the present invention can be obtained.

The aqueous coating to be used in the method of the present invention has extremely excellent adhesiveness to a metal plate base as a pre-coat, and the epoxy resin type aqueous coating as a top-coat has a similar coating composition with compatible of the precoating composition so that drape therebetween is good and covering can be carried out with less coating amount and interlaminar adhesiveness is extremely good.

The aqueous resin composition of the present invention is to improve processability thereof without impairing dispersion stability by making a multilayer structure comprising an acrylic resin (C) having a low acid value/an epoxy resin/an acrylic resin (A) having a high acid value from the inside to contain a material having low glass transition temperature inside thereof. Further, by previously condensing a phenol resin and/or an amino resin (D) to the above multilayer structure, curability, flavor maintaining property and corrosion resistance can be improved, and thus, the aqueous resin composition of the present invention can be used favorably as an inner surface coating for beverage cans.

### EXAMPLES

In the following, the present invention is described in detail but the scope of the present invention is not limited by these. All parts and % each show part(s) by weight and % by weight, respectively.

### Synthesis example 1 Synthesis of high acid value acrylic resin

In a flask replaced with nitrogen was charged a quarter of a mixture comprising 240 parts of styrene, 180 parts of ethyl acrylate, 358 parts of methacrylic acid, 170 parts of butyl cellosolve, 300 parts of n-butanol and 15 parts of benzoyl peroxide and the mixture was heated to 80 to 90 °C, and the remaining three quarters of the mixture was gradually added dropwise at the same temperature over 4 hours. Then, a mixture of 2 parts of benzoyl peroxide and 50 parts of butyl cellosolve was gradually added dropwise over 30 minutes. After completion of the dropwise addition, the mixture was stirred for further 2 hours at the same temperature to obtain a high acid value acrylic resin solution having a solid component of 60 % and a solid component acid value of 300.

### Synthesis example 2 Synthesis of high acid value acrylic resin

In a flask replaced with nitrogen was charged a quarter of a mixture comprising 667 parts of monobutyl maleate, 330 parts of styrene, 90 parts of ethyl acrylate, 175 parts of butyl cellosolve, 500 parts of n-butanol and 21 parts of azobisisobutyronitrile and the mixture was heated to 120 to 130 °C, and the remaining three quarters of the mixture was gradually added dropwise at the same temperature over 2 hours. Then, a mixture of 3 parts of azobisisobutyronitrile and 50 parts of butyl cellosolve was gradually added dropwise over 30 minutes. After completion of the dropwise addition, the mixture was stirred for further 2 hours at the same temperature to obtain a high acid value acrylic resin solution having a solid component of 60 % and a solid component acid value of 200.

### Synthesis example 3 Synthesis of low acid value acrylic resin

In a flask replaced with nitrogen was charged a quarter of a mixture comprising 240 parts of styrene, 528 parts of 2-ethylhexyl acrylate, 10 parts of acrylic acid, 219 parts of butyl cellosolve, 300 parts of n-butanol and 15 parts of benzoyl peroxide and the mixture was heated to 80 to 90 °C, and the remaining three quarters of the mixture was gradually added dropwise at the same temperature over 2 hours. Then, a mixture of 2 parts of benzoyl peroxide and 50 parts of butyl cellosolve was gradually added dropwise over 30 minutes. After completion of the dropwise addition, the mixture was stirred for further 2 hours at the same temperature to obtain a low acid value acrylic resin solution having a solid component of 60 % and a solid component acid value of 10.

### Synthesis example 4 Synthesis of low acid value acrylic resin

In a flask replaced with nitrogen was charged a quarter of a mixture comprising 50 parts of monobutyl maleate, 400 parts of styrene, 637 parts of 2-ethylhexyl acrylate, 175 parts of butyl cellosolve, 500 parts of n-butanol and 21 parts of azobisisobutyronitrile and the mixture was heated to 120 to 130 °C, and the remaining three quarters of the mixture was gradually added dropwise at the same temperature over 2 hours. Then, a mixture of 3 parts of azobisisobutyronitrile and 50 parts of butyl cellosolve was gradually added dropwise over 30 minutes. After completion of the dropwise addition, the mixture was stirred for further 2 hours at the same temperature to obtain a low acid value acrylic resin solution having a solid component of 60 % and a solid component acid value of 15.

### Synthesis example 5 Synthesis of epoxy resin

In a flask were charged 500 parts of an epoxy resin "Epikote 1009" (trade name, epoxy equivalent: 3100, available from Shell Chemical), 133 parts of butyl cellosolve and 200 parts of cellosolve acetate, and the mixture was dissolved under stirring at 120 °C to obtain an epoxy resin solution having a solid component of 60 %.

### Synthesis example 6 Synthesis of epoxy resin

In a flask were charged 500 parts of an epoxy resin "Epikote 1007" (trade name, epoxy equivalent: 2400, available from Shell Chemical), 7.6 parts of adipic acid, 1 part of tri(n-butyl)amine and 338 parts of cellosolve acetate, and the mixture was reacted at 120 °C for 5 hours to obtain an epoxy resin solution having a solid component of 60 % and a solid component acid value of 0.2.

### Synthesis example 7 Synthesis of resol type phenol resin

Carbolic acid (phenol) (94 parts), 37 % formalin (405 parts) and 25 % sodium hydroxide aqueous solution (211 parts) were mixed and reacted at 50 °C for 2 hours. After neutralizing with hydrochloric acid, the mixture was extracted with a mixed solution of ethyl acetate/n-butanol = 1/1 to obtain a resol type phenol resin solution having a solid component of 80 %.

### Synthesis example 8 Synthesis of allylated resol type phenol resin

The reaction was carried out in the same composition ratio and the same conditions as in Synthesis example 7, and then 80 parts of allyl chloride was added to the resin solution. The mixture was reacted at the same temperature for one hour and then treated in the same manner as in Synthesis example 7 to obtain an allylated resol type phenol resin having a solid component of 80 %.

### Synthesis examples 9 to 13 Synthesis of low acid value acrylic acid

In a flask replaced with nitrogen was charged each of a quarter of a mixture having the composition shown in Table 1 and the mixture was heated to 80 to 90 °C, and the remaining three quarters were gradually added dropwise at the same temperature over 2 hours. Then, a mixture of 2 parts of benzoyl peroxide and 50 parts of butyl cellosolve was gradually added dropwise over 30 minutes. After completion of the dropwise addition, the mixture was stirred for further 2 hours at the same temperature to obtain low acid value acrylic resin solutions having a solid component and a solid component acid value as shown in Table 1, respectively.

**Table 1**

| Composition | Synthesis example | | | | |
|---|---|---|---|---|---|
| | 9 | 10 | 11 | 12 | 13 |
| Styrene | 297 | 290 | 260 | 230 | 225 |
| Butyl methacrylate | 78 | 78 | 78 | 78 | 78 |
| 2-Ethylhexyl acrylate | 400 | 400 | 400 | 400 | 400 |
| Acrylic acid | 3 | 10 | 30 | 70 | 75 |
| n-Butanol | 120 | 120 | 120 | 120 | 120 |
| Cellosolve acetate | 350 | 350 | 350 | 350 | 350 |
| Benzoyl peroxide | 15 | 15 | 15 | 15 | 15 |
| Solid component (%) | 60 | 60 | 60 | 60 | 60 |
| Solid component acid value | 3 | 10 | 30 | 70 | 75 |

### Synthesis examples 14 to 18 Synthesis of high acid value acrylic acid

In a flask replaced with nitrogen was charged each of a quarter of a mixture having the composition shown in Table 2 and the mixture was heated to 80 to 90 °C, and the remaining three quarters were gradually added dropwise at the same temperature over 2 hours. Then, a mixture of 2 parts of benzoyl peroxide and 50 parts of methyl isobutyl ketone was gradually added dropwise over 30 minutes. After completion of the dropwise addition, the mixture was stirred for further 2 hours at the same temperature to obtain high acid value acrylic resin solutions having a solid component and a solid component acid value as shown in Table 2, respectively.

**Table 2**

| Composition | Synthesis example | | | | |
|---|---|---|---|---|---|
| | 14 | 15 | 16 | 17 | 18 |
| Styrene | 559 | 529 | 349 | 170 | 100 |
| Butyl methacrylate | 129 | 129 | 129 | 129 | 129 |
| Acrylic acid | 90 | 120 | 300 | 479 | 549 |
| n-Butanol | 260 | 260 | 260 | 260 | 260 |
| Methyl isobutyl ketone | 210 | 210 | 210 | 210 | 210 |
| Benzoyl peroxide | 15 | 15 | 15 | 15 | 15 |
| Solid component (%) | 60 | 60 | 60 | 60 | 60 |
| Solid component acid value | 90 | 120 | 300 | 480 | 550 |

### Synthesis example 19 Synthesis of epoxy resin-bound acrylic monomer

In a flask were charged 1,440 parts of an epoxy resin "Epikote 1007" (trade name) and 970 parts of cellosolve acetate and uniformly dissolved at 130 °C. Then, 1 part of dimethylethanolamine and 17 parts of methacrylic acid were added to the solution and the mixture was stirred at the same temperature for 4 hours to obtain an epoxy resin-bound acrylic monomer solution having an acid value of 0.1.

### Synthesis example 20 Synthesis of epoxy resin-bound acrylic resin

In a flask was charged 450 parts of n-butanol, and a mixture of 240 parts of styrene, 180 parts of 2-ethylhexyl acrylate, 300 parts of methyl acrylate, 500 parts of the epoxy resin-bound acrylic monomer solution obtained in Synthesis example 19 and 15 parts of benzoyl peroxide was gradually added dropwise at 80 to 90 °C over 3 hours. Then, a mixture of 2 parts of benzoyl peroxide and 30 parts of n-butanol was gradually added dropwise at the same temperature over 30 minutes. Stirring was continued for further 2 hours at the same temperature to obtain an epoxy resin-bound acrylic resin solution having a solid component of 60 %.

### Synthesis example 21 Synthesis of epoxy resin-bound acrylic resin

In a flask were charged 480 parts of "Epikote 1007" (trade name) and 750 parts of cellosolve acetate and uniformly dissolved at 110 °C. Then, a mixture of 240 parts of styrene, 480 parts of butyl acrylate and 30 parts of benzoyl peroxide was gradually added dropwise over 2 hours. Then, a mixture of 3 parts of benzoyl peroxide and 50 parts of cellosolve acetate was gradually added dropwise at the same temperature over 30 minutes. Stirring was continued for further 2 hours at the same temperature to obtain an epoxy resin-bound acrylic resin solution having a solid component of 60 %.

### Synthesis example 22 Synthesis of epoxy resin-bound acrylic monomer

In a flask were charged 2000 parts of an epoxy resin-bound acrylic resin solution of Synthesis example 21, 5 parts of cellosolve acetate, 1 part of dimethylethanolamine and 8 parts of methacrylic acid, and the mixture was stirred at 130 °C for 8 hours to obtain an epoxy resin-bound acrylic monomer solution having an acid value of 0.1.

### Synthesis example 23 Synthesis of epoxy resin-bound acrylic resin

In a flask was charged 500 parts of n-butanol, and a mixture of 240 parts of styrene, 280 parts of ethyl methacrylate, 258 parts of methacrylic acid, 1080 parts of the epoxy resin-bound acryl monomer solution obtained in Synthesis example 22 and 20 parts of benzoyl peroxide was gradually added dropwise at 80 to 90 °C over 3 hours. Then, a mixture of 2 parts of benzoyl peroxide and 18 parts of n-butanol was gradually added dropwise at the same temperature over 30 minutes. Stirring was continued for further 3 hours at the same temperature to obtain an epoxy resin-bound acrylic resin solution having a solid component of 60 % and a solid component acid value of 118.

Using the resins synthesized by the above Synthesis examples, aqueous resin compositions of the present invention are prepared as mentioned below. Coating films of the aqueous resin compositions are evaluated by the method as mentioned below.

### Comparative synthesis example 1

In a flask was charged 283 parts of butyl cellosolve and maintaining the mixture to 110 °C, a mixture of 74 parts of styrene and 3 parts of benzoyl peroxide was gradually added dropwise over 2 hours. Then, a mixture of 2.5 parts of benzoyl peroxide and 20 parts of butyl cellosolve was gradually added dropwise over 30 minutes. After completion of the dropwise addition, the mixture was further stirred at the same temperature for 3 hours to obtain a polystyrene resin solution. To the solution were added 872 parts of Dow Epoxy DER-333 (trade name, available from Dow Chemical, epoxy equivalent: 189) and 470 parts of bisphenol A, and the mixture was elevated to 140 °C. According to the exothermic reaction, the temperature of the solution was elevated. After maintaining the mixture to 170 °C or higher for 3 hours, 254 parts of butyl cellosolve and 889 parts of n-butanol were added. While maintaining the mixture to 118 °C, a mixture of 299 g of methacrylic acid, 95 parts of styrene, 4 parts of ethyl acrylate, 30 parts of benzoyl peroxide and 101 parts of butyl cellosolve was gradually added dropwise over 2 hours. Thereafter, 57 parts of n-butanol was added and the mixture was maintained at 110 °C for 3 hours to obtain a graft-containing resin reaction product.

### a) Processing resistance

Between test pieces was interposed an aluminum plate having the same thickness with that of the test piece, and the test pieces were tighten with a vise. Then, the degree of cracks at the processing portion of the coating film was judged using a 50-fold magnifying glass.
- O:: No crack
- △:: Some cracks exist
- X:: Significant numbers of cracks exist

### b) Corrosion resistance

A test piece in which the back surface had been sealed with a polyester tape was dipped in a boiled 3 % saline solution for one hour, and the corroded degree at the surface of the coating film was judged.
- O:: No corrosion
- △:: Corrosion slightly occurred
- X:: Significant corrosion occurred

### c) Retort resistance

A test piece was treated in a retort sterilizer at 125 °C for 30 minutes and the whitening degree of the coating film was judged.
- O:: No whitening
- △:: Whitening slightly occurred
- X:: Significant whitening occurred

### d) Hot water resistance

A test piece was dipped in a boiled deionized water for one hour to judge the whitening degree of the coating film.
- O:: No whitening
- △:: Whitening slightly occurred
- X:: Significant whitening occurred

### e) Consumed amount of potassium permanganate

A both surfaces coated test piece was placed in a pressure bottle made of a glass and after charging therein tap water treated with an activated charcoal so as to become the contact ratio with the coating surface being 1 cm²/1 ml and sealed, it was treated with a retort steriliser at 125 °C for 30 minutes. Then, the treated solution was measured by the test method described in a food hygiene law of Japan.
- O:: less than 5 ppm
- △:: 5 to 10 ppm
- X:: more than 10 ppm

### f) Flavor maintaining property

A both surfaces coated test piece was placed in a pressure bottle made of a glass and after charging therein tap water treated with an activated charcoal so as to become the contact ratio with the coating surface being 1 cm²/1 ml and sealed, it was treated with a retort sterilizer at 125 °C for 30 minutes. Thereafter, it was stored at 50 °C for 3 months and a functional test was carried out.
- O:: No change
- △:: Slightly changed
- X:: Significantly changed

### g) Adhesiveness

A test piece was cut to a width of 5 mm and a length of 25 cm and the two test pieces were interposed by facing the coating films inside, and a Nylon (trade name) film (available from Dicel Co., polyamide film #7000) having a length of 9 cm was interposed between the coating films. This material was adhered by pressing using a hot press at 200 °C for 40 seconds under a pressure of 5 kg/cm² to prepare a test piece. This test piece was peeled off (T peel) by Tensilon (trade name, available from Toyo Boldwin Co.) with a tensile rate of 200 mm/min, and the peel strength at that time was made the adhesion strength.
- O:: more than 3 kg
- △:: 1 to 3 kg
- X:: less than 1 kg

### Example 1

In a flask were charged 83 parts of the low acid value acrylic resin solution obtained in Synthesis example 3, 1333 parts of the epoxy resin solution obtained in Synthesis example 5 and 57 parts of dimethylethanolamine, and the mixture was stirred at 100 °C for 3 hours. After confirming the acid value of 0.2, 333 parts of the high acid value acrylic copolymer resin solution obtained in Synthesis example 1 was added to the mixture and the mixture was stirred at the same temperature for further 30 minutes.

After cooling to 80 °C, 3444 parts of deionized water was added thereto, the mixture was stirred for 30 minutes to obtain an aqueous resin composition having a solid component of 20 % and a pH of 7.0. This composition was coated on one surface of an aluminum plate having a thickness of 0.30 mm with a dried coating amount of 70 mg/dm², and baked at 250 °C for 30 seconds. Stability of the aqueous resin composition, and adhesiveness, processability, corrosion resistance, retort resistance and hot water resistance of the coating film were evaluated according to the test methods as mentioned above. The results are shown in Table 3.

### Comparative example 1

In a flask were charged 333 parts of the high acid value acrylic resin solution obtained in Synthesis example 1, 1333 parts of the epoxy resin solution obtained in Synthesis example 5 and 57 parts of dimethylethanolamine, and the mixture was stirred at 100 °C for 3 hours. After cooling to 30 °C, 83 parts of the low acid value acrylic copolymer resin solution obtained in Synthesis example 3 was added thereto and uniformly stirred. Then, 3444 parts of deionised water was added to the mixture and the mixture was heated to 80 °C and stirred for 30 minutes to obtain an aqueous resin composition having a solid component of 20 % and a pH of 7.8. This composition was treated in the same manner as in Example 1 to prepare a coating film. Stability of the aqueous resin composition, and evaluated results of the coating film are shown in Table 3.

### Example 2

To 5250 parts of the aqueous resin composition of Example 1 was added 125 parts of the resol type phenol resin solution obtained in Synthesis example 7 to prepare an aqueous resin composition. In the same manner as in Example 1, a coating film was prepared. Stability of the aqueous resin composition and evaluated results of the coating film are shown in Table 3.

### Comparative example 2

To 5250 parts of the aqueous resin composition of Comparative example 1 was added 125 parts of the resol type phenol resin solution obtained in Synthesis example 7 to prepare an aqueous resin composition. In the same manner as in Example 1, a coating film was prepared. Stability of the aqueous resin composition and evaluated results of the coating film are shown in Table 3.

### Comparative example 3

In the same manner as in Comparative example 2 except for adding the low acid value acrylic resin obtained in Synthesis example 3, an aqueous resin composition was prepared and also a coating film was prepared. Stability of the aqueous resin composition and evaluated results of the coating film are shown in Table 3.

### Example 3

In the same manner as in Example 2 except for using 100 parts of hexamethoxymethylmelamine in place of 125 parts of the resol type phenol resin solution obtained in Synthesis example 7, a coating film was prepared. Stability of the aqueous resin composition and evaluated results of the coating film are shown in Table 3.

### Example 4

In a flask were charged charged 120 parts of the epoxy resin-bound acrylic resin solution obtained in Synthesis example 20, 1080 parts of the epoxy resin solution obtained in Synthesis example 6, 500 parts of the high acid value acrylic resin solution obtained in Synthesis example 1 and 85 parts of dimethylethanolamine, and the mixture was stirred at 80 °C for one hour. Thereafter, 1615 parts of deionized water was added thereto, and the mixture was stirred at the same temperature to obtain an aqueous resin composition having a solid component of 30 % and a pH of 7.3. By using this composition, a coating film was prepared in the same manner as in Example 1. Stability of the aqueous resin composition and evaluated results of the coating film are shown in Table 3.

### Example 5

To 3400 parts of the aqueous resin composition of Example 4 were added 100 parts of the resol type phenol resin solution obtained in Synthesis example 7 and 20 parts of hexamethoxymethylmelamine to prepare an aqueous resin composition. By using this composition, a coating film was prepared in the same manner as in Example 1. Stability of the aqueous resin composition and evaluated results of the coating film are shown in Table 3.

### Example 6

In a flask were charged charged 1000 parts of the epoxy resin-bound acrylic resin solution obtained in Synthesis example 23 and 500 parts of the epoxy resin solution obtained in Synthesis example 5, and under stirring at 80 °C, a mixture of 2927 parts of deionized water and 73 parts of dimethylethanolamine was gradually added dropwise to the mixture over 30 minutes. The mixture was stirred at the same temperature for 10 minutes to obtain an aqueous resin composition having a solid component of 20 % and a pH of 7.8. By using this composition, a coating film was prepared in the same manner as in Example 1. Stability of the aqueous resin composition and evaluated results of the coating film are shown in Table 3.

### Example 7

To 3000 parts of the aqueous resin composition of Example 6 was added 40 parts of the allylated resol type phenol resin solution obtained in Synthesis example 8 to prepare an aqueous resin composition. By using this composition, a coating film was prepared in the same manner as in Example 1. Stability of the aqueous resin composition and evaluated results of the coating film are shown in Table 3.

### Comparative example 4

In a flask were charged 1956 parts of the epoxy resin solution obtained in Synthesis example 5 and 490 parts of the high acid value acrylic resin solution obtained in Synthesis example 1, and after stirring at 90 °C until the mixture became uniform, 100 parts of deionized water and 84 parts of dimethylethanolamine were charged therein and then the mixture was stirred at the same temperature for one hour. To the mixture was added 6580 parts of deionized water and the mixture was cooled to 65 °C. Further, after adding 21 parts of ammonium bisulfite, a mixture of 657 parts of styrene, 657 parts of butyl acrylate and 8.73 parts of t-butylhydroperoxide (90 %) was gradually added dropwise to the mixture over 2 hours. After maintaining the same temperature for one hour, 0.9 part of t-butylhydroperoxide (90 %) was added thereto. After 5 minutes from the addition, a mixture of 1.8 parts of ammonium bisulfite and 27 parts of deionized water was added, and the mixture was maintained at the same temperature for one hour to obtain an aqueous resin composition having a solid component of 26 % and a pH of 7.0. By using this composition, a coating film was prepared in the same manner as in Example 1. Stability of the aqueous resin composition and evaluated results of the coating film are shown in Table 3.

### Comparative example 5

The graft-containing resin reaction product (3188 parts) obtained in Comparative synthesis example 1 was added to a mixture of 3862 parts of deionized water, 229 parts of butyl cellosolve and 181 parts of dimethylethanolamine to obtain an aqueous resin composition having a solid component of 25 % and a pH of 7.0. By using this composition, a coating film was prepared in the same manner as in Example 1. Stability of the aqueous resin composition and evaluated results of the coating film are shown in Table 3.

**Table 3**

| | Example | | | | | | | Comparative example | | | | |
|---|---|---|---|---|---|---|---|---|---|---|---|---|
| | 1 | 2 | 3 | 4 | 5 | 6 | 7 | 1 | 2 | 3 | 4 | 5 |
| Stability of aqueous resin composition | O | O | O | O | O | O | O | X | X | O | X | O |
| Adhesiveness | O | O | O | O | O | O | O | X | △ | X | X | X |
| Processing resistance | O | O | O | O | O | O | O | △ | △ | X | X | X |
| Corrosion resistance | O | O | O | O | O | O | O | △ | O | O | O | O |
| Retort resistance | O | O | O | O | O | O | O | △ | △ | O | O | O |
| Hot water resistance | O | O | O | O | O | O | O | △ | △ | O | O | O |

### Examples 8 to 11

As shown in Table 4, in a flask were formulated 167 parts of the low acid value acrylic resin solution obtained in Synthesis example 9, 10, 11 or 12, 1167 parts of the epoxy resin solution obtained in Synthesis example 5 and 118 parts of tri(n-butyl)amine, and the mixture was stirred at 100 °C for 3 hours. Further, 333 parts of the high acid value acrylic resin obtained in Synthesis example 1 was added to the mixture and the mixture was stirred at the same temperature for 2 hours. Thereafter, deionized water was added thereto to obtain an aqueous resin composition. To the composition was added 63 parts of the allylated resol type phenol resin solution obtained in Synthesis example 8 to prepare an aqueous resin composition having a solid component of 30 %. By using this composition, a coating film was prepared in the same manner as in Example 1. Stability of the aqueous resin composition and evaluated results of the coating film are shown in Table 4.

### Comparative example 6

In the same manner as in Examples 8 to 11 except for using the low acid value acrylic resin solution obtained in Synthesis example 13 in place of that of Synthesis example 9, 10, 11 or 12, an aqueous resin composition was prepared. By using this composition, a coating film was prepared in the same manner as in Example 1. Stability of the aqueous resin composition and evaluated results of the coating film are shown in Table 4.

**Table 4**

| | Example | | | | Comparative example |
|---|---|---|---|---|---|
| | 8 | 9 | 10 | 11 | 6 |
| Low acid value acrylic resin solution (Synthesis example No.) | 9 | 10 | 11 | 12 | 13 |
| Stability of aqueous resin composition | O | O | O | O | X |
| Adhesiveness | O | O | O | O | △ |
| Processing resistance | O | O | O | O | O |
| Corrosion resistance | O | O | O | O | O |
| Retort resistance | O | O | O | O | O |
| Hot water resistance | O | O | O | O | O |

### Examples 12 to 14

As shown in Table 5, in a flask were charged 250 parts of the low acid value acrylic resin solution obtained in Synthesis example 4, 917 parts of the epoxy resin solution obtained in Synthesis example 6 and tri(n-butyl)amine in an amount shown in Table 5, and the mixture was stirred at 120 °C for 3 hours. After confirming the acid value of 0.2, 500 parts of the high acid value acrylic resin obtained in Synthesis example 15, 16 or 17 was added to the mixture and the mixture was stirred at the same temperature for 30 minutes. Thereafter, deionized water was added thereto to obtain an aqueous resin composition. To the composition was added 250 parts of the resol type phenol resin solution obtained in Synthesis example 7 to prepare an aqueous resin composition having a solid component of 30 %. By using this composition, a coating film was prepared in the same manner as in Example 1. Stability of the aqueous resin composition and evaluated results of the coating film are shown in Table 5.

### Comparative examples 7 and 8

In the same manner as in Examples 12 to 14 except for using the high acid value acrylic resin solution obtained in Synthesis example 14 or 18 in place of that of Synthesis example 15, 16 or 17, an aqueous resin composition was prepared. By using this composition, a coating film was prepared in the same manner as in Example 1. Stability of the aqueous resin composition and evaluated results of the coating film are shown in Table 5.

**Table 5**

| | Example | | | Comparative example | |
|---|---|---|---|---|---|
| | 12 | 13 | 14 | 7 | 8 |
| Tri(n-butyl)amine | 71 | 178 | 284 | 53 | 326 |
| High acid value acrylic resin solution (Synthesis example No.) | 15 | 16 | 17 | 14 | 18 |
| Stability of aqueous resin composition | O | O | O | X | O |
| Adhesiveness | O | O | O | O | △ |
| Processing resistance | O | O | O | X | △ |
| Corrosion resistance | O | O | O | O | X |
| Retort resistance | O | O | O | O | X |
| Hot water resistance | O | O | O | O | X |

### Example 15

In a flask were charged 333 parts of the low acid value acrylic resin solution obtained in Synthesis example 4, 1000 parts of the epoxy resin solution obtained in Synthesis example 5 and 118 parts of tri(n-butyl)amine, and the mixture was stirred at 100 °C for 3 hours. After confirming the acid value of 0.2, 250 parts of the resol type phenol resin solution obtained in Synthesis example 7 and 333 parts of the high acid value acrylic resin solution obtained in Synthesis example 1 were added to the mixture and the mixture was stirred for further 30 minutes at the same temperature. The product could be confirmed to be provisionally condensed by measuring the molecular weight using GPC (gel permeation chromatography). After cooling to 80 °C, 2766 parts of deionized water was added thereto, the mixture was stirred for 30 minutes to obtain an aqueous resin composition having a solid component of 25 %, a pH of 6.4 and a viscosity of 980 cps (each measured at 25 °C, hereinafter the same as the above). This composition was coated on one surface of an aluminum plate having a thickness of 0.30 mm with a dried coating amount of 70 mg/dm², and on both surfaces of an aluminum foil with a dried coating amount of 70 mg/dm², and baked at 250 °C for 30 seconds. Adhesiveness, processability, corrosion resistance, retort resistance and hot water resistance were evaluated with regard to the one surface coated plate and consumed amount of potassium permanganate and flavor maintaining property were evaluated with regard to the both surfaces coated plate according to the test methods as mentioned above. The results are shown in Table 6.

### Example 16

In a flask were charged 333 parts of the low acid value acrylic resin solution obtained in Synthesis example 4, 1000 parts of the epoxy resin solution obtained in Synthesis example 5 and 118 parts of tri(n-butyl)amine, and the mixture was stirred at 100 °C for 3 hours. After confirming the acid value of 0.2, 333 parts of the high acid value acrylic copolymer resin solution obtained in Synthesis example 1 was added to the mixture and the mixture was stirred at the same temperature for further 30 minutes. After cooling to 80 °C, 2766 parts of deionised water was added thereto, and the mixture was cooled to 25 °C. Then, 250 parts of the resol type phenol resin solution obtained in Synthesis example 7 was added to the mixture to obtain an aqueous resin composition having a solid component of 25 %, a pH of 7.2 and a viscosity of 1210 cps. By using this composition, a coating film was prepared in the same manner as in Example 15. The evaluated results of the coating film are shown in Table 6.

### Comparative example 9

In a flask were charged 1000 parts of the epoxy resin solution obtained in Synthesis example 5, 118 parts of tri(n-butyl)amine, 250 parts of the resol type phenol resin solution obtained in Synthesis example 7 and 333 parts of the high acid value acrylic resin solution obtained in Synthesis example 1, and the mixture was stirred at 100 °C for 30 minutes. After cooling to 80 °C, 2299 parts of deionized water was added to the mixture and the mixture was stirred at the same temperature for 30 minutes to obtain an aqueous resin composition having a solid component of 25 %, a pH of 7.1 and a viscosity of 1100 cps. By using this composition, a coating film was prepared in the same manner as in Example 15. The evaluated results of the coating film are shown in Table 6.

### Example 17

A coating film was prepared in the same manner as in Example 15 except for using 200 parts of hexamethoxymethylmelamine in place of 250 parts of the resol type phenol resin solution obtained in Synthesis example 7. The evaluated results of the coating film are shown in Table 6.

### Example 18

In a flask were charged 250 parts of the low acid value acrylic resin solution obtained in Synthesis example 3, 916 parts of the epoxy resin solution obtained in Synthesis example 6 and 2 parts of dimethylethanolamine, and the mixture was stirred at 100 °C for 3 hours. After confirming the acid value of 0.1, 125 parts of the allylated resol type phenol resin solution obtained in Synthesis example 8 was added to the mixture, and the mixture was stirred at the same temperature for one hour to obtain an allylated resol type phenol resin-provisionally condensed acryl-modified epoxy resin solution. This resin can be confirmed to be provisionally condensed by measuring the molecular weight using GPC.

On the other hand, in another flask was charged 333 parts of the high acid value acrylic resin solution obtained in Synthesis example 1, and after heating to 80 °C under stirring, a mixture of 57 parts of dimetylethanolamine and 3317 parts of deionized water was added to the mixture and the mixture was stirred at the same temperature for 30 minutes. Thereafter, 1293 parts of the aforesaid allylated resol type phenol resin-provisionally condensed acryl-modified epoxy resin solution was gradually added dropwise to the mixture at the same temperature over 30 minutes to obtain an aqueous resin composition having a solid component of 20 %, a pH of 6.9 and a viscosity of 480 cps. By using this composition, a coating film was prepared in the same manner as in Example 15. The evaluated results of the coating film are shown in Table 6.

### Example 19

In a flask were charged 120 parts of the epoxy resin-bound acrylic resin solution obtained in Synthesis example 20, 1080 parts of the epoxy resin solution obtained in Synthesis example 5, 500 parts of the high acid value acrylic resin solution obtained in Synthesis example 1 and 125 parts of the resol type phenol resin solution obtained in Synthesis example 7, and the mixture was stirred at 80 °C for one hour. The product could be confirmed that the phenol resin was provisionally condensed by measuring the molecular weight using GPC. After cooling to 80 °C, the mixture was gradually added dropwise over 30 minutes to a mixture of 85 parts of dimethylethanolamine and 1823 parts of deionized water. The mixture was stirred at the same temperature for 30 minutes to obtain an aqueous resin composition having a solid component of 30 %, a pH of 7.9 and a viscosity of 870 cps. By using this composition, a coating film was prepared in the same manner as in Example 15. The evaluated results of the coating film are shown in Table 6.

### Example 20

In a flask were charged 500 parts of the epoxy resin-bound acrylic resin solution obtained in Synthesis example 23, 1500 parts of the epoxy resin solution obtained in Synthesis example 5, 37.5 parts of the allylated resol type phenol resin obtained in Synthesis example 8 and 2 parts of hexamethoxymethylmelamine, and the mixture was stirred at 80 °C for one hour. The product could be confirmed that the phenol resin and the melamine resin were provisionally condensed by measuring the molecular weight using GPC. While stirring the mixture at the same temperature, a mixture of 2032 parts of deionized water and 34 parts of dimethylethanolamine was gradually added dropwise over 30 minutes. Stirring was continued for further 10 minutes at the same temperature to obtain an aqueous resin composition having a solid component of 30 %, a pH of 6.8 and a viscosity of 740 cps. By using this composition, a coating film was prepared in the same manner as in Example 15. The evaluated results of the coating film are shown in Table 6.

**Table 6**

| | Example | | | | | | Comparative example |
|---|---|---|---|---|---|---|---|
| | 15 | 16 | 17 | 18 | 19 | 20 | 9 |
| Stability of aqueous resin composition | O | O | O | O | O | O | X |
| Adhesiveness | O | O | O | O | O | O | X |
| Processing resistance | O | O | O | O | O | O | O |
| Corrosion resistance | O | O | O | O | O | O | O |
| Retort resistance | O | O | O | O | O | O | O |
| Hot water resistance | O | O | O | O | O | O | O |
| Consumed amount of potassium permanganate | O | O | O | O | O | O | O |
| Flavor maintaining property | O | O | O | O | O | O | O |

### Examples 21 to 24

As shown in Table 7, in a flask were formulated 333 parts of the low acid value acrylic resin solution obtained in Synthesis example 9, 10, 11 or 12, 833 parts of the epoxy resin solution obtained in Synthesis example 5 and 57 parts of dimethylethanolamine, and the mixture was stirred at 80 °C for 3 hours. Then, 125 parts of the allylated resol type phenol resin solution obtained in Synthesis example 8 and 333 parts of the high acid value acrylic resin obtained in Synthesis example 1 were added to the mixture and the mixture was stirred at the same temperature for 30 minutes. The product could be confirmed to be provisionally condensed by measuring the molecular weight using GPC. Then, 2319 parts of deionized water was added to the mixture and the mixture was stirred at the same temperature for 30 minutes to obtain an aqueous resin composition having a solid component of 25 %, a pH of 6.3 to 7.7 and a viscosity of 460 to 920 cps, respectively. By using this composition, a coating film was prepared in the same manner as in Example 15. Stability of the aqueous resin composition and evaluated results of the coating film are shown in Table 7.

### Comparative example 10

In the same manner as in Examples 21 to 24 except for using the low acid value acrylic resin solution obtained in Synthesis example 13 in place of that of Synthesis example 9, 10, 11 or 12, an aqueous resin composition was prepared. By using this composition, a coating film was prepared in the same manner as in Example 15. Stability of the aqueous resin composition and evaluated results of the coating film are shown in Table 7.

**Table 7**

| | Example | | | | Comparative example |
|---|---|---|---|---|---|
| | 21 | 22 | 23 | 24 | 10 |
| Low acid value acrylic resin solution (Synthesis example No.) | 9 | 10 | 11 | 12 | 13 |
| Stability of aqueous resin composition | O | O | O | O | X |
| Adhesiveness | O | O | O | O | △ |
| Processing resistance | O | O | O | O | O |
| Corrosion resistance | O | O | O | O | O |
| Retort resistance | O | O | O | O | O |
| Hot water resistance | O | O | O | O | O |
| Consumed amount of potassium permanganate | O | O | O | O | O |
| Flavor maintaining property | O | O | O | O | O |

### Examples 25 to 27

As shown in Table 8, in a flask were charged 167 parts of the low acid value acrylic resin solution obtained in Synthesis example 3, 833 parts of the epoxy resin solution obtained in Synthesis example 6 and 1 part of tri(n-butyl)amine, and the mixture was stirred at 120 °C for 3 hours. After confirming the acid value of 0.5, 110 parts of the resol type phenol resin solution obtained in Synthesis example 7 and 416 parts of the high acid value acrylic resin obtained in Synthesis example 15, 16 or 17 were added to the mixture and the mixture was stirred at the same temperature for 30 minutes. The product could be confirmed to be provisionally condensed by measuring the molecular weight using GPC. After cooling the mixture to 80 °C, deionized water and dimethylethanolamine in an amount shown in Table 8 were added thereto and the mixture was stirred at the same temperature for 30 minutes to obtain an aqueous resin composition having a solid component of 25 %, a pH of 6.5 to 7.8 and a viscosity of 630 to 1100 cps, respectively. By using each of the composition, a coating film was prepared in the same manner as in Example 15. Stability of the aqueous resin composition and evaluated results of the coating film are shown in Table 8.

### Comparative examples 11 and 12

In the same manner as in Examples 25 to 27 except for using the high acid value acrylic resin solution obtained in Synthesis Example 14 or 18 in place of that of Synthesis example 15, 16 or 17, an aqueous resin composition was prepared. By using this composition, a coating film was prepared in the same manner as in Example 15. Stability of the aqueous resin composition and evaluated results of the coating film are shown in Table 8.

**Table 8**

| | Example | | | Comparative example | |
|---|---|---|---|---|---|
| | 25 | 26 | 27 | 11 | 12 |
| Dimethylethanolamine | 28 | 71 | 114 | 21 | 130 |
| High acid value acrylic resin solution (Synthesis example No.) | 15 | 16 | 17 | 14 | 18 |
| Stability of aqueous resin composition | O | O | O | X | O |
| Adhesiveness | O | O | O | O | △ |
| Processing resistance | O | O | O | X | △ |
| Corrosion resistance | O | O | O | O | X |
| Retort resistance | O | O | O | O | X |
| Hot water resistance | O | O | O | O | X |
| Consumed amount of potassium permanganate | O | O | O | O | O |
| Flavor maintaining property | O | O | O | O | O |

### Preparation example 1 Preparation of aqueous coating

In a flask were charged 200 parts of the high acid value acrylic resin solution obtained in Synthesis example 1, 800 parts of the epoxy resin solution obtained in Synthesis example 5, 34 parts of dimethylethanolamine, 100 parts of n-butanol and 260 parts of deionised water, and the mixture was stirred at 60 °C for 2 hours. Then, 1756 parts of deionized water was gradually added to the mixture over 30 minutes, and after stirring at the same temperature for 30 minutes, 50 parts of the allylated resol type phenol resin solution obtained in Synthesis example 8 to obtain an aqueous coating having a solid component of 20 % and a pH of 6.8.

### Preparation example 2 Preparation of aqueous coating

In a flask were charged 83 parts of the low acid value acrylic resin solution obtained in Synthesis example 3, 1333 parts of the epoxy resin solution obtained in Synthesis example 5 and 57 parts of dimethylethanolamine, and the mixture was stirred at 100 °C for 3 hours. After confirming the acid value of 0.2, 333 parts of the high acid value acrylic resin solution obtained in Synthesis example 1 was added to the mixture and the mixture was further stirred at the same temperature for 30 minutes. After cooling to 80 °C, 3444 parts of deionized water was added to the mixture. The mixture was stirred for 30 minutes and then 30 parts of the resol type phenol resin obtained in Synthesis example 7 to obtain an aqueous coating having a solid component of 20 % and a pH of 7.0.

### Preparation example 3 Preparation of aqueous coating

In a flask were charged 120 parts of the epoxy resin-bound acrylic resin solution obtained in Synthesis example 20, 1080 parts of the epoxy resin solution obtained in Synthesis example 6, 300 parts of the high acid value acrylic resin solution obtained in Synthesis example 1 and 85 parts of dimethylethanolamine, and the mixture was stirred at 80 °C for one hour. Then, 1415 parts of deionized water was added to the mixture, and after stirring at the same temperature to obtain an aqueous coating having a solid component of 30 % and a pH of 7.3.

### Preparation example 4 Preparation of aqueous coating

In a flask were charged 333 parts of the low acid value acrylic resin solution obtained in Synthesis example 4, 1000 parts of the epoxy resin solution obtained in Synthesis example 5 and 118 parts of tri(n-butyl)amine, and the mixture was stirred at 100 °C for 3 hours. After confirming the acid value of 0.2, 250 parts of the resol type phenol resin solution obtained in Synthesis example 7 and 333 parts of the high acid value acrylic resin solution obtained in Synthesis example 1 were added to the mixture and the mixture was stirred at the same temperature for 30 minutes. The product could be confirmed to be provisionally condensed by measuring the molecular weight using GPC. After cooling to 80 °C, 2766 parts of deionised water was added to the mixture and the mixture was stirred for 30 minutes to obtain an aqueous coating having a solid component of 20 % and a pH of 7.0.

### Preparation example 5 Preparation of aqueous coating

In the same manner as in Preparation example 2 except for using 30 parts of Cymel 254 (trade name, an amino resin, available from Mitsui Cyanamide Co.) in place of 30 parts of the resol type phenol resin solution of Synthesis example 7, an aqueous coating having a solid component of 20 % and a pH of 6.5 was prepared.

### Example 28

To a #25 tin plate (Temper: T-1) having a thickness of 0.3 mm and defatted with Surfcleaner SN 311 (trade name, an alkaline defatting agent, available from Nippon Paint Co., Ltd.) was pre-coated the aqueous coating of Preparation example 2 with a roll coater so as to have a dried film thickness of 2 »m, and the plate was baked at a furnace temperature of 220 °C for 60 seconds.

This plate was DI-processed so as to become the coated surface inside and molded to US can standard 211 x 414, and then defatted with Surfcleaner SN 311 (as mentioned above).

Then, on the inner surface of the can was subjected to top-coat coating by using the aqueous coating of Preparation example 1 by spraying so as to the dried coating amount of 180 mg/can, and baked at a furnace temperature of 220 °C for 60 seconds. Coating film properties at the inside of the can were evaluated according to the following test methods and the results are shown in Table 9.

### Test methods

### (1) Metal exposed degree

Into the coated can was introduced 350 ml of a 1 % saline solution containing 0.3 % of Aerosol OT-100 (trade name, available from American Cyanamide Co.), and then 6 V of a voltage was applied and a passed current (mA) after 4 seconds was measured.

### (2) Corrosion resistance

Into the coated can was introduced 350 ml of a 3 % saline solution, and the can was covered by a glass plate and sealed with a commercially available sealant. After allowing to stand at 60 °C for 2 months, corroded state at the inside surface was observed.
- O:: No corrosion
- △:: Corrosion slightly occurred
- X:: Significant corrosion occurred

### Comparative example 13

In the same manner as in Example 28 except for effecting pre-coating of the aqueous coating of Preparation example 2, a coated can was prepared Coating film properties at the inside of the can are shown in Table 9.

### Comparative example 14

In the same manner as in Example 28 except for pre-coating the aqueous coating of Preparation example 1 in place of that of Preparation example 2, a coated can was prepared. Coating film properties at the inside of the can are shown in Table 9.

### Example 29

In the same manner as in Example 28 except for pre-coating the aqueous coating of Preparation example 3 in place of that of Preparation example 2, a coated can was prepared. Coating film properties at the inside of the can are shown in Table 9.

### Example 30

In the same manner as in Example 28 except for pre-coating the aqueous coating of Preparation example 4 in place of that of Preparation example 2, a coated can was prepared. Coating film properties at the inside of the can are shown in Table 9.

### Example 31

In the same manner as in Example 28 except for top-coating the aqueous coating of Preparation example 2 in place of that of Preparation example 1, a coated can was prepared. Coating film properties at the inside of the can are shown in Table 9.

### Example 32

By using an aluminum plate (3004 H-19) having a thickness of 0.3 mm in place of a #25 tin plate (Temper: T-1) having a thickness of 0.3 mm and after defatting with Surfcleaner 322N-8 (trade name, an alkaline defatting agent, available from Nippon Paint Co., Ltd.), the plate was subjected to etching with Surfcleaner 420N-2 (trade name, an alkaline etching agent, available from Nippon Paint Co., Ltd.) and subjected to conversion treatment with Alsurf 401/45 (trade name, a chromium phosphate type conversion treatment agent, available from Nippon Paint Co., Ltd.). To one surface of the thus treated plate was pre-coated the aqueous coating of Preparation example 5 so as to have a dried film thickness of 1 »m, and the plate was baked at a furnace temperature of 270 °C for 30 seconds.

This plate was DI-processed so as to become the coated surface inside and after molding to US can standard 211 x 414, it was defatted with Surfcleaner NHC100 (trade name, an acidic defatting agent, available from Nippon Paint Co., Ltd.) and then subjected to conversion treatment with Alsurf 404 (trade name, a non-chromium type conversion treatment agent, available from Nippon Paint Co., Ltd.).

Then, on the inner surface of the can was subjected to top-coat coating by using the aqueous coating of Preparation example 3 by spraying so as to the dried coating amount of 150 mg/can (a film thickness of 3 to 8 »m), and baked at a furnace temperature of 220 °C for 60 seconds. Coating film properties at the inside of the can were evaluated according to the following test methods and the results are shown in Table 9.

### Example 33

To an outside surface of #25 tin plate (Temper: T-1) having a thickness of 0.3 mm and defatted with Surfcleaner SN 311 (as mentioned above) was coated by a roll coater a white coating paint prepared by dissolving 100 parts of PKHM-301 (trade name, a phenoxy resin, available from Union Carbide Co.) in a mixed solvent of 200 parts of propyleneglycol monomethyl ether and 200 parts of propyleneglycol monomethyl ether acetate, and dispersing therein 80 parts of titanium dioxide according to the conventional method so as to have a dried coating amount of 140 mg/dm², and the plate was baked at a furnace temperature of 200 °C for 60 seconds.

Then, an inside surface of the plate was pre-coated with the aqueous coating of Preparation example 2 in the same manner as in Example 28. After DI-processing, a coated can was obtained in the same manner as in Example 28. Coating film properties at the inside of the can were evaluated according to the following test methods and the results are shown in Table 9.

**Table 9**

| | Example | | | | | | Comparative example | |
|---|---|---|---|---|---|---|---|---|
| Evaluated item | 28 | 29 | 30 | 31 | 32 | 33 | 13 | 14 |
| Metal exposed amount (mA) | 0.02 | 0.15 | 0.07 | 0.02 | 0.05 | 0.02 | 18.3 | 15.4 |
| Corrosion resistance | O | O | O | O | O | O | X | X |

The method for forming a coating film on a can body of the present invention uses aqueous coatings for both of the pre-coat and top-coat so that it contributes to prevention of pollution of working environment and global environment. Also, it is no fear of fire, handling of the coating is easy and coating can be done with one top-coating so that it contributes to decrease in production costs of cans. Further, as shown in Examples, corrosion resistance is improved and quality of the cans can be improved.

## Claims

1. An aqueous resin composition characterized in that it comprises a material comprising an acrylic resin (A) having an acid value of 0 to 70 and an epoxy resin (B), which are partially bound to each other, and an acrylic resin (C) having an acid value of 100 to 500 which is further partially bound to a bound product of (A) and (B), being dispersed in an aqueous solution containing a volatile base (E), wherein the weight ratio of the solid components of said material (A)/(B)/(C) is (1 to 20)/(90 to 50)/(9 to 30); the partial bond(s) between the acrylic resin (A) and the epoxy resin (B) and the bound product of (A) and (B) and the resin (C), respectively, are formed by at least one method selected from the group consisting of:
(1) a method in which an ester bond and/or a salt bond of the following formula (I) is formed by reacting an epoxy group of the epoxy resin and a carboxyl group of the acrylic resin using an amine as a catalyst and, if necessary, in the presence of water; 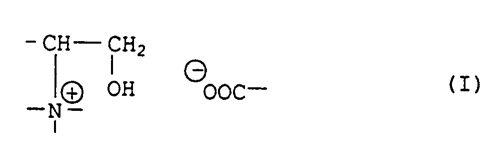
(2) a method in which an ester bond is formed by reacting an alpha,beta-unsaturated acid with the epoxy resin and then polymerizing the product as one component of polymeric monomers with other copolymerizable monomer(s); and
(3) a method in which an acrylic polymerization is carried out in an epoxy resin solution to obtain an epoxy resin-grafted acrylic resin.

2. The composition according to claim 1, wherein the weight ratio of the solid components of said material (A)/(B)/(C) is (5 to 10)/(85 to 70)/(10 to 20).

3. The composition according to claim 1 or 2, wherein the composition is further mixed with at least one of a resol type phenol resin and an amino resin (D).

4. The composition of any one of claims 1 to 3, wherein an acid value of the acrylic resin (A) is 3 to 50 and an acid value of the acrylic resin (C) is 120 to 480.

5. The composition of any one of claims 1 to 4, wherein an acid value of the acrylic resin (A) is 5 to 40 and an acid value of the acrylic resin (C) is 150 to 350.

6. The composition of any one of claims 1 to 5, wherein the composition further contains an anti-corrosion pigment.

7. An aqueous resin composition characterized in that it comprises a material comprising an acrylic resin (A) having an acid value of 0 to 70 and an epoxy resin (B), which are partially bound to each other, an acrylic resin (C) having an acid value of 100 to 500 which is further partially bound to a bound product of (A) and (B), and at least one of a resol type phenol resin and an amino resin (D) which is provisionally condensed with a bound product of (A), (B) and (C), being dispersed in an aqueous solution containing a volatile base (E), wherein the weight ratio of the solid components of said material (A)/(B)/(C) is (1 to 20)/(90 to 50)/(9 to 30);
the partial bond(s) between the acrylic resin (A) and the epoxy resin (B) and the bound product of (A) and (B) and the resin (C), respectively, are formed by at least one method selected from the group consisting of:
(1) a method in which an ester bond and/or a salt bond of the following formula (I) is formed by reacting an epoxy group of the epoxy resin and a carboxyl group of the acrylic resin using an amine as a catalyst and, if necessary, in the presence of water; 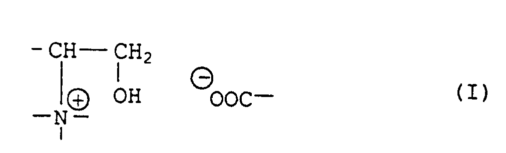
(2) a method in which an ester bond is formed by reacting an alpha,beta-unsaturated acid with the epoxy resin and then polymerizing the product as one component of polymeric monomers with other copolymerizable monomer(s); and
(3) a method in which an acrylic polymerization is carried out in an epoxy resin solution to obtain an epoxy resin-grafted acrylic resin.

8. The composition according to claim 7, wherein the weight ratio of solid components of said material (A)/(B)/(C) is (5 to 10)/(95 to 70)/(10 to 20).

9. The composition of claims 7 or 8, wherein an acid value of the acrylic resin (A) is 3 to 50 and an acid value of the acrylic resin (C) is 120 to 480.

10. The composition of any one of claims 7 to 9, wherein an acid value of the acrylic resin (A) is 5 to 40 and an acid value of the acrylic resin (C) is 150 to 350.

11. The composition of any one of claims 7 to 10, wherein the composition further contains an anti-corrosion pigment.

12. A method for forming a coating film which comprises the steps of:
(I) subjecting to pre-coat coating of an aqueous coating comprising an acrylic resin (A) having an acid value of 0 to 70 and an epoxy resin (B), which are partially bound to each other, and an acrylic resin (C) having an acid value of 100 to 500 which is further partially bound to a bound product of (A) and (B), and being dispersed in an aqueous solution containing a volatile base (E), wherein the weight ratio of the solid components of said material (A)/(B)/(C) is (1 to 20)/(90 to 50)/(9 to 30);
the partial bond(s) between the acrylic resin (A) and the epoxy resin (B) and the bound product of (A) and (B) and the resin (C), respectively, are formed by at least one method selected from the group consisting of:
(1) a method in which an ester bond and/or a salt bond of the following formula (I) is formed by reacting an epoxy group of the epoxy resin and a carboxyl group of the acrylic resin using an amine as a catalyst and, if necessary, in the presence of water; 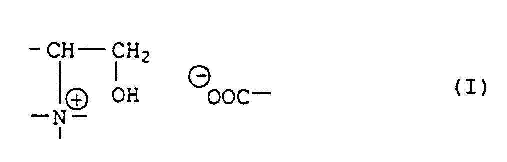
(2) a method in which an ester bond is formed by reacting an alpha,beta-unsaturated acid with the epoxy resin and then polymerizing the product as one component of polymeric monomers with other copolymerizable monomer(s); and
(3) a method in which an acrylic polymerization is carried out in an epoxy resin solution to obtain an epoxy resin-grafted acrylic resin,
on the surface of a metal plate;
(II) curing a film of the above pre-coat coating;
(III) subjecting to plastic processing of the metal plate coated with the pre-coat coating by making the cured film inner surface to form a can body having a bottom;
(IV) subjecting to top-coat coating of an epoxy resin series aqueous coating or the above aqueous resin composition of the step (I) on the inner surface of the can body having a bottom; and
(V) curing the above top-coat coating film.

13. A method for forming a coating film which comprises the steps of:
(I) subjecting to pre-coat coating of an aqueous coating comprising an acrylic resin (A) having an acid value of 0 to 70 and an epoxy resin (B), which are partially bound to each other, and an acrylic resin (C) having an acid value of 100 to 500 which is condensed to a bound product of (A) and (B), and being dispersed in an aqueous solution containing a volatile base (E), wherein the weight ratio of the solid components of said material (A)/(B)/(C) is (1 to 20)/(90 to 50)/(9 to 30);
the partial bond(s) between the acrylic resin (A) and the epoxy resin (B) and the bound product of (A) and (B) and the resin (C), respectively, are formed by at least one method selected from the group consisting of:
(1) a method in which an ester bond and/or a salt bond of the following formula (I) is formed by reacting an epoxy group of the epoxy resin and a carboxyl group of the acrylic resin using an amine as a catalyst and, if necessary, in the presence of water; 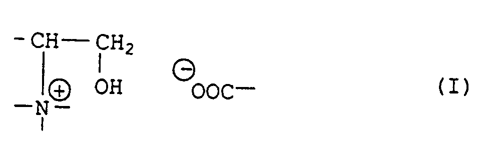
(2) a method in which an ester bond is formed by reacting an alpha,beta-unsaturated acid with the epoxy resin and then polymerizing the product as one component of polymeric monomers with other copolymerizable monomer(s); and
(3) a method in which an acrylic polymerization is carried out in an epoxy resin solution to obtain an epoxy resin-grafted acrylic resin,
on the surface of a metal plate; and
(II) curing a film of the above pre-coat coating.

14. The method according to claim 12 or 13, wherein the weight ratio of the solid components of said material (A)/(B)/(C) is (5 to 10)/(85 to 70)/(10 to 20).

15. The method of any one of claims 12 to 14, wherein an acid value of the acrylic resin (A) is 3 to 50 and an acid value of the acrylic resin (C) is 120 to 480.

16. The method of any one of claims 12 to 14, wherein an acid value of the acrylic resin (A) is 5 to 40 and an acid value of the acrylic resin (C) is 150 to 350.

17. The method of any one of claims 12 to 16, wherein the composition further contains an anti-corrosion pigment.

## Patentansprüche

1. Wäßrige Harzzusammensetzung, dadurch gekennzeichnet, daß sie ein Material enthält, das ein Acrylharz (A), das eine Säurezahl von 0 bis 70 hat, und ein Epoxidharz (B) umfaßt, die teilweise miteinander verbunden sind, sowie ein Acrylharz (C), das eine Säurezahl von 100 bis 500 hat, das weiterhin teilweise an das verbundene Produkt von (A) und (B) gebunden ist,
dispergiert in einer wäßrigen Lösung, die eine flüchtige Base (E) enthält,
wobei das Gewichtsverhältnis der festen Komponenten des Materials (A)/(B)/(C) (1 bis 20)/(90 bis 50)/(9 bis 30) beträgt; wobei die teilweise(n) Bindung(en) zwischen dem Acrylharz (A) und dem Epoxidharz (B) und dem gebundenen Produkt von (A) und (B) sowie dem Harz (C) durch wenigstens ein Verfahren gebildet wird/(werden), das aus der Gruppe ausgewählt ist, die besteht aus:
(1) einem Verfahren, bei dem eine Esterbindung und/oder eine Salzbindung der folgenden Formel (I) gebildet wird durch Reaktion einer Epoxy-Gruppe des Epoxidharzes und einer Carboxy-Gruppe des Acrylharzes unter Verwendung eines Amins als Katalysator, und falls erforderlich, in Gegenwart von Wasser; 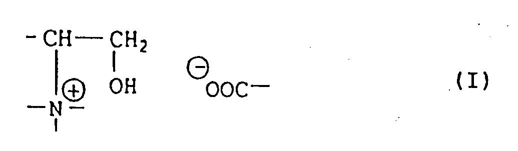
(2) einem Verfahren, bei dem eine Esterbindung durch Reaktion einer α,β-ungesättigten Säure mit dem Epoxidharz gebildet wird, und anschließend das Produkt als eine Komponente der polymeren Monomeren mit (einem) anderen copolymerisierbaren Monomeren polymerisiert wird; und
(3) einem Verfahren, bei dem eine Acryl-Polymerisation in einer Epoxidharzlösung durchgeführt wird, um ein Epoxidharz-gepfropftes Acrylharz zu erhalten.

2. Zusammensetzung nach Anspruch 1, worin das Gewichtsverhältnis der festen Komponenten des Materials (A)/(B)/(C) die Werte (5 bis 10)/(85 bis 70)/(10 bis 20) hat.

3. Zusammensetzung nach Anspruch 1 oder 2, worin die Zusammensetzung weiterhin mit wenigstens einem von einem Phenolharz vom Resol-Typ und einem Aminoharz (D) vermischt wird.

4. Zusammensetzung nach einem der Ansprüche 1 bis 3, worin die Säurezahl des Acrylharzes (A) 3 bis 50 beträgt, und die Säurezahl des Acrylharzes (C) beträgt 120 bis 480.

5. Zusammensetzung nach einem der Ansprüche 1 bis 4, worin die Säurezahl des Acrylharzes (A) 5 bis 40 beträgt, und die Säurezahl des Acrylharzes (C) beträgt 150 bis 350.

6. Zusammensetzung nach einem der Ansprüche 1 bis 5, worin die Zusammensetzung weiterhin ein Antikorrosionspigment enthält.

7. Wäßrige Harzzusammensetzung, dadurch gekennzeichnet, daß sie ein Material umfaßt, das ein Acrylharz (A) mit einer Säurezahl von 0 bis 70 und ein Epoxidharz (B) umfaßt, die teilweise miteinander verbunden sind, sowie ein Acrylharz (C), das eine Säurezahl von 100 bis 500 hat, das weiterhin teilweise mit einem gebundenen Produkt von (A) und (B) verbunden ist, und wenigstens eines von einem Phenolharz vom Resol-Typ und einem Aminoharz (D) umfaßt, das vorläufig mit einem gebundenen Produkt von (A), (B) und (C) kondensiert ist,
dispergiert in einer Wäßrigen Lösung, die eine flüchtige Base (E) enthält,
worin das Gewichtsverhältnis der festen Komponenten des Materials (A)/(B)/(C) (1 bis 20)/(90 bis 50)/(9 bis 30) beträgt; wobei die teilweise(n) Bindung(en) zwischen dem Acrylharz (A) und dem Epoxidharz (B) und dem gebundenen Produkt von (A) und (B) sowie dem Harz (C) durch wenigstens ein Verfahren gebildet wird/(werden), das aus der Gruppe ausgewählt ist, die besteht aus:
(1) einem Verfahren, bei dem eine Esterbindung und/oder eine Salzbindung der folgenden Formel (I) gebildet wird durch Reaktion einer Epoxy-Gruppe des Epoxidharzes und einer Carboxy-Gruppe des Acrylharzes unter Verwendung eines Amins als Katalysator, und falls erforderlich, in Gegenwart von Wasser; 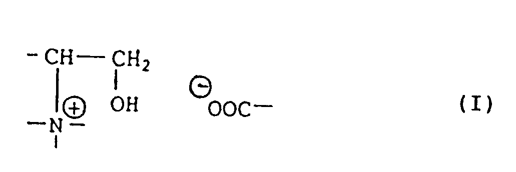
(2) einem Verfahren, bei dem eine Esterbindung durch Reaktion einer α,β-ungesättigten Säure mit dem Epoxidharz gebildet wird, und anschließend das Produkt als eine Komponente der polymeren Monomeren mit (einem) anderen copolymerisierbarem Monomeren polymerisiert wird; und
(3) einem Verfahren, bei dem eine Acryl-Polymerisation in einer Epoxidharzlösung durchgeführt wird, um ein Epoxidharz-gepfropftes Acrylharz zu erhalten.

8. Zusammensetzung nach Anspruch 7, worin das Gewichtsverhältnis der festen Komponenten des Material (A)/(B)/(C) die Werte (5 bis 10)/(95 bis 70)/(10 bis 20) hat.

9. Zusammensetzung nach Anspruch 7 oder 8, worin die Säurezahl des Acrylharzes (A) 3 bis 50 beträgt, und die Säurezahl des Acrylharzes (C) beträgt 120 bis 480.

10. Zusammensetzung nach einem der Ansprüche 7 bis 9, worin die Säurezahl des Acrylharzes (A) 5 bis 40 beträgt, und die Säurezahl des Acrylharzes (C) beträgt 150 bis 350.

11. Zusammensetzung nach einem der Ansprüche 7 bis 10, worin die Zusammensetzung weiterhin ein Antikorrosionspigment enthält.

12. Verfahren zur Bildung eines Beschichtungsfilmes, das die Schritte umfaßt:
(I) Auftragen eines Vorbeschichtungsüberzuges aus einem wäßrigen Überzug, der ein Acrylharz (A), das eine Säurezahl von 0 bis 70 hat, und ein Epoxidharz (B) umfaßt, die teilweise miteinander verbunden sind, sowie ein Acrylharz (C), das eine Säurezahl von 100 bis 500 hat, das weiterhin teilweise an das verbundene Produkt von (A) und (B) gebunden ist,
dispergiert in einer wäßrigen Lösung, die eine flüchtige Base (E) enthält,
wobei das Gewichtsverhältnis der festen Komponenten des Materials (A)/(B)/(C) (1 bis 20)/(90 bis 50)/(9 bis 30) beträgt; wobei die teilweise(n) Bindung(en) zwischen dem Acrylharz (A) und dem Epoxidharz (B) und dem gebundenen Produkt von (A) und (B) sowie dem Harz (C) durch wenigstens ein Verfahren gebildet wird/(werden), das aus der Gruppe ausgewählt ist, die besteht aus:
(1) einem Verfahren, bei dem eine Esterbindung und/oder eine Salzbindung der folgenden Formel (I) gebildet wird durch Reaktion einer Epoxy-Gruppe des Epoxidharzes und einer Carboxy-Gruppe des Acrylharzes unter Verwendung eines Amins als Katalysator, und falls erforderlich, in Gegenwart von Wasser; 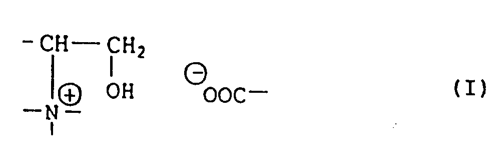
(2) einem Verfahren, bei dem eine Esterbindung durch Reaktion einer α,β-ungesättigten Säure mit dem Epoxidharz gebildet wird, und anschließend das Produkt als eine Komponente der polymeren Monomeren mit (einem) anderen copolymerisierbarem Monomeren polymerisiert wird; und
(3) einem Verfahren, bei dem eine Acryl-Polymerisation in einer Epoxidharzlösung durchgeführt wird, um ein Epoxidharz-gepfropftes Acrylharz zu erhalten,
auf die Oberfläche eines Metallbleches;
(II) Härtung eines Filmes aus dem obigen Vorbeschichtungsüberzug;
(III) Unterwerfen des Metallbleches, das mit dem Vorbeschichtungsüberzug überzogen ist, einer plastischen Bearbeitung, bei der die innere Oberfläche des gehärteten Filmes einen Büchsenkörper mit einem Boden bildet;
(IV) Auftragen eines Deckschichtüberzuges aus der Reihe wäßriger Epoxidharzüberzüge oder der obigen wäßrigen Harzzusammensetzung von Stufe (I) auf die innere Oberfläche des Büchsenkörpers mit einem Boden; und
(V) Härtung des obigen Deckschichtfilmes.

13. Verfahren zur Bildung eines Beschichtungsfilmes, das die Schritte umfaßt:
(I) Auftragen eines Vorbeschichtungsüberzuges aus einem wäßrigen Überzug, umfassend ein Acrylharz (A), das eine Säurezahl von 0 bis 70 hat, und ein Epoxidharz (B) umfaßt, die teilweise miteinander verbunden sind, sowie ein Acrylharz (C), das eine Säurezahl von 100 bis 500 hat, das weiterhin teilweise an das verbundene Produkt von (A) und (B) gebunden ist,
dispergiert in einer wäßrigen Lösung, die eine flüchtige Base (E) enthält,
wobei das Gewichtsverhältnis der festen Komponenten des Materials (A)/(B)/(C) (1 bis 20)/(90 bis 50)/(9 bis 30) beträgt; wobei die teilweise(n) Bindung(en) zwischen dem Acrylharz (A) und dem Epoxidharz (B) und dem gebundenen Produkt von (A) und (B) sowie dem Harz (C) durch wenigstens ein Verfahren gebildet wird/(werden), das aus der Gruppe ausgewählt ist, die besteht aus:
(1) einem Verfahren, bei dem eine Esterbindung und/oder eine Salzbindung der folgenden Formel (I) gebildet wird durch Reaktion einer Epoxy-Gruppe des Epoxidharzes und einer Carboxy-Gruppe des Acrylharzes unter Verwendung eines Amins als Katalysator, und falls erforderlich, in Gegenwart von Wasser; 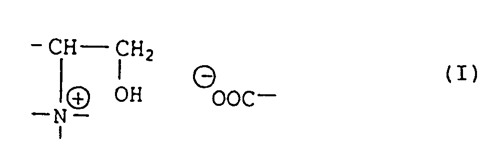
(2) einem Verfahren, bei dem eine Esterbindung durch Reaktion einer α,β-ungesättigten Säure mit dem Epoxidharz gebildet wird, und anschließend das Produkt als eine Komponente der polymeren Monomeren mit (einem) anderen copolymerisierbarem Monomeren polymerisiert wird; und
(3) einem Verfahren, bei dem eine Acryl-Polymerisation in einer Epoxidharzlösung durchgeführt wird, um ein Epoxidharz-gepfropftes Acrylharz zu erhalten,
auf die Oberfläche eines Metallbleches; und
(II) Härtung eines Filmes aus dem obigen Vorbeschichtungsüberzug.

14. Verfahren nach Anspruch 12 oder 13, worin das Gewichtsverhältnis der festen Komponenten des Materials (A)/(B)/(C)/ die Werte (5 bis 10)/(85 bis 70)/(10 bis 20) hat.

15. Verfahren nach einem der Ansprüche 12 bis 14, worin die Säurezahl des Acrylharzes (A) 3 bis 50 beträgt, und die Säurezahl des Acrylharzes (C) beträgt 120 bis 480.

16. Verfahren nach einem der Ansprüche 12 bis 14, worin die Säurezahl des Acrylharzes (A) 5 bis 40 beträgt, und die Säurezahl des Acrylharzes (C) beträgt 150 bis 350.

17. Verfahren nach einem der Ansprüche 12 bis 16, worin die Zusammensetzung weiterhin ein Antikorrosionspigment enthält.

## Revendications

1. Composition aqueuse de résine, caractérisée en ce qu'elle comprend un matériau comprenant une résine acrylique (A) ayant un indice d'acide compris entre 0 et 70 et une résine époxy (B), qui sont partiellement liées l'une à l'autre, et une résine acrylique (C) ayant un indice d'acide compris entre 100 et 500, qui est en outre partiellement liée à un produit lié constitué de (A) et (B), dispersée dans une solution aqueuse contenant une base volatile (E), où la proportion pondérale des composants solides dudit matériau (A)/(B)/(C) est de (1 à 20)/(90 à 50)/(9 à 30) ; la ou les liaisons partielles entre la résine acrylique (A) et la résine époxy (B), et entre le produit lié de (A) et (a) et la résine (C), sont respectivement formées par au moins un procédé choisi dans le groupe constitué par :
(1) un procédé dans lequel une liaison ester et/ou une liaison sel ayant la formule (I) ci-après est formée par réaction d'un groupe époxy de la résine époxy et un groupe carboxyle de la résine acrylique, en utilisant une amine en tant que catalyseur et, si nécessaire, en présence d'eau ; 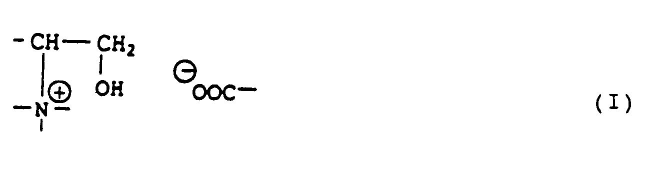
(2) un procédé dans lequel une liaison ester est formée par réaction d'un acide à insaturation α,β avec la résine époxy, puis par polymérisation du produit sous forme d'un composant de monomères polymérisables avec un ou plusieurs autres monomères copolymérisables ; et
(3) un procédé dans lequel une polymérisation acrylique est mise en oeuvre dans une solution de résine époxy, pour obtenir une résine acrylique sur laquelle est greffée une résine époxy.

2. Composition selon la revendication 1, dans laquelle la proportion pondérale des composants solides dudit matériau (A)/(B)/(C) est de (5 à 10)/(85 à 70)/(10 à 20).

3. Composition selon la revendication 1 ou 2, dans laquelle la composition est en outre mélangée avec au moins une résine phénolique de type résol et une résine aminée (D).

4. Composition selon l'une quelconque des revendications 1 à 3, dans laquelle l'indice d'acide de la résine acrylique (A) est de 3 à 50 et l'indice d'acide de la résine acrylique (C) est de 120 à 480.

5. Composition selon l'une quelconque des revendications 1 à 4, dans laquelle l'indice d'acide de la résine acrylique (A) est de 5 à 40 et l'indice d'acide de la résine acrylique (C) est de 150 à 300.

6. Composition selon l'une quelconque des revendications 1 à 5, dans laquelle la composition contient en outre un pigment anticorrosion.

7. Composition aqueuse de résine, caractérisée en ce qu'elle comprend un matériau comprenant une résine acrylique (A) ayant un indice d'acide compris entre 0 et 70 et une résine époxy (B), qui sont partiellement liées l'une à l'autre, une résine acrylique (C) ayant un indice d'acide compris entre 100 et 500, qui est en outre partiellement liée à un produit lié constitué de (A) et (B), et au moins une résine phénolique de type résol et une résine aminée (D) qui est provisoirement condensée avec un produit lié constitué de (A), (B) et (C), dispersée dans une solution aqueuse contenant une base volatile (E), où la proportion pondérale des composants solides dudit matériau (A)/(B)/(C) est de (1 à 20)/(90 à 50)/(9 à 30) ;
la ou les liaisons partielles entre la résine acrylique (A) et la résine époxy (B), et entre le produit lié constitué par (A) et (B) et la résine (C) sont respectivement formées par au moins un procédé choisi dans le groupe constitué par :
(1) un procédé dans lequel une liaison ester et/ou une liaison sel ayant la formule (I) ci-après est formée par réaction d'un groupe époxy de la résine époxy et un groupe carboxyle de la résine acrylique, en utilisant une amine en tant que catalyseur et, si nécessaire, en présence d'eau ; 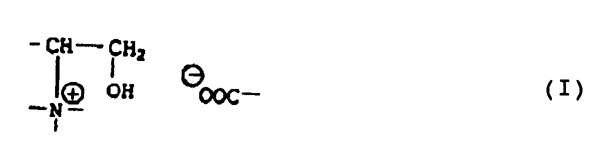
(2) un procédé dans lequel une liaison ester est formée par réaction d'un acide à insaturation α,β avec la résine époxy, puis par polymérisation du produit sous forme d'un composant de monomères polymérisables avec un ou plusieurs autres monomères copolymérisables ; et
(3) un procédé dans lequel une polymérisation acrylique est mise en oeuvre dans une solution de résine époxy, pour obtenir une résine acrylique sur laquelle est greffée une résine époxy.

8. Composition selon la revendication 7, dans laquelle la proportion pondérale des composants solides dudit matériau (A)/(B)/(C) est de (5 à 10)/(95 à 70)/(10 à 20).

9. Composition selon la revendication 7 ou 8, dans laquelle l'indice d'acide de la résine acrylique (A) est de 3 à 50 et l'indice d'acide de la résine acrylique (C) est de 120 à 480.

10. Composition selon l'une quelconque des revendications 7 à 9, dans laquelle l'indice d'acide de la résine acrylique (A) est de 5 à 40 et l'indice d'acide de la résine acrylique (C) est de 150 à 350.

11. Composition selon l'une quelconque des revendications 7 à 10, dans laquelle la composition contient en outre un pigment anticorrosion.

12. Procédé pour former un film de revêtement, qui comprend les étapes consistant à :
(I) appliquer en couche primaire un revêtement aqueux comprenant une résine acrylique (A) ayant un indice d'acide valant de 0 à 70 et une résine époxy (B), qui sont partiellement liées l'une à l'autre, et une résine acrylique (C) ayant un indice d'acide compris entre 100 et 500, qui est en outre partiellement liée à un produit lié constitué de (A) et (B), et qui est dispersée dans une solution aqueuse contenant une base volatile (E), où la proportion pondérale des composants solides dudit matériau (A)/(B)/(C) est de (1 à 20)/(90 à 50)/(9 à 30) ;
la ou les liaisons partielles entre la résine acrylique (A) et la résine époxy (B), et entre le produit lié de (A) et (B) et la résine (C) sont respectivement formées par au moins un procédé choisi dans le groupe constitué par :
(1) un procédé dans lequel une liaison ester et/ou une liaison sel ayant la formule (I) ci-après est formée par réaction d'un groupe époxy de la résine époxy et un groupe carboxyle de la résine acrylique, en utilisant une amine en tant que catalyseur et, si nécessaire, en présence d'eau ; 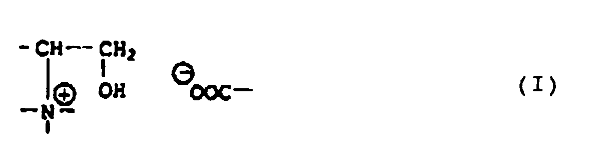
(2) un procédé dans lequel une liaison ester est formée par réaction d'un acide à insaturation α,β avec la résine époxy, puis par polymérisation du produit sous forme d'un composant de monomères polymérisables avec un ou plusieurs autres monomères copolymérisables ; et
(3) un procédé dans lequel une polymérisation acrylique est mise en oeuvre dans une solution de résine époxy, pour obtenir une résine acrylique sur laquelle est greffée une résine époxy,
sur la surface d'une plaque métallique ;
(II) durcir un film du revêtement formant couche primaire ci-dessus ;
(III) soumettre à une mise en oeuvre plasturgique la plaque métallique revêtue du revêtement en couche primaire en donnant à la surface intérieure du film durci la forme d'un corps de boîte de conserve muni d'un fond ;
(IV) soumettre à un revêtement de finition un revêtement aqueux à base de résine époxy ou la composition aqueuse de résine ci-dessus de l'étape (I) sur la surface intérieure du corps de boîte de conserve ayant un fond ; et
(V) durcir le film de revêtement de finition ci-dessus.

13. Procedé pour former un film de revêtement, qui comprend les étapes consistant à :
(I) appliquer en couche primaire un revêtement aqueux comprenant une résine acrylique (A) ayant un indice d'acide valant de 0 à 70 et une résine époxy (B), qui sont partiellement liées l'une à l'autre, et une résine acrylique (C) ayant un indice d'acide compris entre 100 et 500 qui est condensée à un produit lié de (A) et (B), et qui est dispersée dans une solution aqueuse contenant une base volatile (E), où la proportion pondérale des composants solides dudit matériau (A)/(B)/(C) est de (1 à 20)/(90 à 50)/(9 à 30) ;
la ou les liaisons partielles entre la résine acrylique (A) et la résine époxy (B), et entre le produit lié de (A) et (B) et la résine (C) sont respectivement formées par au moins un procédé choisi dans le groupe constitué par :
(1) un procédé dans lequel une liaison ester et/ou une liaison sel ayant la formule (I) ci-après est formée par réaction d'un groupe époxy de la résine époxy et un groupe carboxyle de la résine acrylique, en utilisant une amine en tant que catalyseur et, si nécessaire, en présence d'eau ; 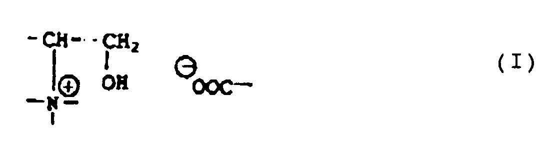
(2) un procédé dans lequel une liaison ester est formée par réaction d'un acide à insaturation α,β avec la résine époxy, puis par polymérisation du produit sous forme d'un composant de monomères polymérisables avec un ou plusieurs autres monomères copolymérisables ; et
(3) un procédé dans lequel une polymérisation acrylique est mise en oeuvre dans une solution de résine époxy, pour obtenir une résine acrylique sur laquelle est greffée une résine époxy,
sur la surface d'une plaque métallique ; et
(II) durcir un film du revêtement formant couche primaire ci-dessus.

14. Composition selon la revendication 12 ou 13, dans laquelle la proportion pondérale des composants solides dudit matériau (A)/(B)/(C) est de (5 à 10)/(85 à 70)/(10 à 20).

15. Composition selon l'une quelconque des revendications 12 à 14, dans laquelle l'indice d'acide de la résine acrylique (A) est de 3 à 50 et l'indice d'acide de la résine acrylique (C) est de 120 à 480.

16. Composition selon l'une quelconque des revendications 12 à 14, dans laquelle l'indice d'acide de la résine acrylique (A) est de 5 à 40 et l'indice d'acide de la résine acrylique (C) est de 150 à 350.

17. Composition selon l'une quelconque des revendications 12 à 16, dans laquelle la composition contient en outre un pigment anticorrosion.
